Europäisches Patentamt

European Patent Office

Office européen des brevets

(19)

(11) **EP 1 486 862 A2**

## (12) EUROPEAN PATENT APPLICATION

(43) Date of publication:
**15.12.2004 Bulletin 2004/51**

(51) Int Cl.⁷: **G06F 3/06**

(21) Application number: **04004379.6**

(22) Date of filing: **26.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.06.2003 JP 2003168588**

(71) Applicant: **Hitachi, Ltd.**
**Chiyoda-ku, Tokyo 101-8010 (JP)**

(72) Inventors:
• **Satoyama, Ai**
**Chiyoda-ku Tokyo (JP)**

• **Matsunami, Naoto**
**Chiyoda-ku Tokyo (JP)**
• **Arai, Kouji**
**Chiyoda-ku Tokyo (JP)**
• **Yamamoto, Yasutomo**
**Chiyoda-ku Tokyo (JP)**
• **Ohno, Hiroshi**
**Chiyoda-ku Tokyo (JP)**

(74) Representative: **Brandis (Freiherr von), Henning**
**Strehl Schübel-Hopf**
**Groening & Partner**
**Maximilianstrasse 54**
**80538 München (DE)**

(54) **Storage system and data reproduction method**

(57)    In a storage apparatus system including a plurality of remote copy ports for executing remote copy processing, loads due to the remote copy processing are dispersed among the plurality of remote copy ports. To this end, information indicative of load states of the plurality of remote copy ports in the storage apparatus system is stored in a common memory of the storage apparatus system and the storage apparatus system causes a remote copy port having a lighter load to execute the remote copy processing with reference to the information. Further, even with regard to the remote copy processing being executed, the storage apparatus system changes the remote copy port for executing the remote copy processing in accordance with the load states of the remote copy ports.

FIG. 1

EP 1 486 862 A2

**Description**

BACKGROUND OF THE INVENTION

The present invention relates to technique (remote copy technique) for copying or reproducing data between disk apparatuses installed in remote places.

When a local disaster such as earthquake, fire and hurricane hits a site where a disk system was installed, there is the possibility that damage is caused to the whole storage apparatus system and all of data stored in the disk system are lost. As one of measures for solving this problem, there is a remote copy function.

The remote copy is to duplicate data between a plurality of storage apparatus systems installed in physically distant places without intervention of a host computer for the purpose of recovery from disaster. When the original storage apparatus system is damaged, the host computer continues operation using the duplicate storage apparatus system.

In an information processing system which executes the remote copy processing, storage apparatus systems installed in physically distant places are connected to each other through exclusive lines. Of a logical storage area (hereinafter referred to as "logical volume") provided in a storage apparatus system, a logical volume having the same capacity as a logical volume for data to be copied (hereinafter referred to as "logical source volume") existing in a storage apparatus system in a first site is formed in a storage apparatus system in a second site as a logical volume (hereinafter referred to as "logical target volume") paired with the logical source volume. Then, data in the logical source volume in the first site is copied into the logical target volume in the second site. Further, when the host computer updates data in the logical source volume in the first site, the updated data is transferred to the storage apparatus system in the second site to be also written into the logical target volume. In this manner, in the remote copy technique, the duplicated state of the logical volume is kept in both the first and second sites.

Accordingly, when the remote copy technique is used, the information processing system including the plurality of storage apparatus systems can maintain the logical volumes having the same contents in the plurality of storage systems. Accordingly, even when the first site cannot be used due to natural disaster such as earthquake or flood or unnatural disaster such as fire or terror, the host computer can employ the logical volume in the storage apparatus system in the second site to resume operation promptly.

The remote copy technique is disclosed in U.S. Patent No. 5,742,792.

Further, the data transfer technique that data stored in a memory area existing in a first storage apparatus system is transferred to a second storage apparatus system and the storage apparatus system used by the host computer is changed from the first storage apparatus system to the second storage apparatus system is effective for the case where the storage apparatus system is changed from the old to the new system and the case where accesses from the host computer to the storage apparatus system is desired to be limited due to maintenance of mechanical equipment or the like. The data transfer technique contains the technique for transferring data between storage apparatus systems while accesses from computers to the storage apparatus systems are continued and which is disclosed in, for example, U.S. Patent No. 6,108,748 and JP-A-2001-331355 (US 09/991219).

SUMMARY OF THE INVENTION

With the spread of the storage area network (SAN), the scalability concerning the capacity and the performance of the storage apparatus is required. Specifically, the performance proportional to the capacity is required for the storage apparatus. Accordingly, in order to respond to such requirement, a conventional storage apparatus is defined to be one cluster (or one storage apparatus subsystem) and a plurality of clusters are connected by means of an inter-cluster connection mechanism to thereby construct a cluster-constituted storage apparatus system.

Each cluster receives input/output requests from computers through a network, while the computers recognize the cluster-constituted storage apparatus system as one storage apparatus system.

In such a cluster-constituted storage apparatus system, when the remote copy processing is executed, a channel port set for the remote copy in the cluster to which the source volume belongs is used to transfer data. The channel port may be used for only the remote copy in certain cases and also sometimes used in common to I/O usually. When a remote copy pair is assigned to a remote copy port, the remote copy port is selected in order among a plurality of remote copy ports.

However, since an amount of data to be copied in the remote copy processing is varied for each pair, there is the possibility that processing is concentrated on the remote copy port of a specific cluster or a specific processor.

It is an object of the present invention to provide technique capable of dispersing loads caused by the remote copy processing in a storage apparatus system.

It is another object of the present invention to provide technique capable of selecting a port or a processor used for the remote copy processing so as to disperse loads among a plurality of remote copy ports or clusters provided in a cluster-constituted storage apparatus system.

It is a further object of the present invention to provide technique capable of executing the remote copy processing by control of a cluster different from a cluster in which data to be copied is stored.

In order to solve the above problems, in a storage apparatus system comprising a plurality of storage apparatus subsystem including a plurality of disk apparatuses and a controller for controlling the plurality of disk apparatuses, and a connection mechanism for connecting between the storage apparatus subsystems, load states of ports or processors included in the storage apparatus system are monitored and a port or a processor for executing remote copy processing is designated in accordance with the load states to cause the designated port or processor to execute the remote copy processing.

Other objects, features and advantages of the invention will become apparent from the following description of the embodiments of the invention taken in conjunction with the accompanying drawings.

BRIEF DESCRIPTION OF THE DRAWINGS

Fig. 1 is a block diagram illustrating an example of a computer system to which the present invention is applied;
Fig. 2 is a diagram showing an example of a pair information table;
Fig. 3 is a diagram showing an example of a volume information table;
Fig. 4 is a diagram showing an example of other cluster information storage location table;
Fig. 5 illustrates an example of a configuration of a cluster;
Fig. 6 is a flow chart showing an example of remote copy processing;
Fig. 7 is a diagram showing an example of a port management information table provided in a cluster-constituted storage apparatus system;
Fig. 8 is a flow chart showing an example of processing for selecting a port used in the remote copy processing;
Fig. 9 is a diagram showing an example of a program stored in a memory of a user input/output apparatus 4;
Fig. 10 is a diagram showing an example of information indicating load states of remote copy ports;
Fig. 11 is a diagram showing an example of a remote copy processing request queue;
Fig. 12 is a diagram showing an example of the remote copy processing between the cluster-constituted storage apparatus systems;
Fig. 13 is a flow charting showing an example of processing for selecting a volume for backed-up data;
Fig. 14 is a flow chart showing an example of formation copy processing;
Fig. 15 is a flow chart showing an example of update copy processing;
Fig. 16 is a flow chart showing an example of processing for changing a port used for the remote copy;
Fig. 17 is a flow chart showing an example of processing for causing a changed remote copy port to execute the remote copy processing;
Fig. 18 is a diagram showing an example of a differential bit map stored in a common memory;
Fig. 19 is a diagram showing an example of an order management table stored in the common memory;
Fig. 20 is a flow chart showing an example of processing for dispersing load in a cluster;
Fig. 21 is a flow chart showing an example of processing for dispersing load between clusters;
Fig. 22 is a block diagram illustrating another example of a computer system to which the present invention is applied;
Fig. 23 is a flow chart showing an example of processing for judging whether transfer of data in a volume for data to be remote copied is necessary or not;
Fig. 24 is a diagram showing an example of a processor load state table in which load states of processors are registered;
Fig. 25 is a flow chart showing an example of data transfer processing for transferring data stored in a volume for data to be remote copied to a volume in another cluster;
Fig. 26 is a diagram showing an example of processing for changing a cluster for executing remote copy processing;
Fig. 27 is a diagram showing an example of a configuration information management table provided in a cluster-distributed system; and
Fig. 28 is a flow chart showing an example of processing for transferring a source volume to another cluster dynamically after formation of a remote copy pair.

DESCRIPTION OF THE EMBODIMENTS

Embodiments of the present invention are now described with reference to the accompanying drawings. However, the present invention is not limited thereto.

<First Embodiment>

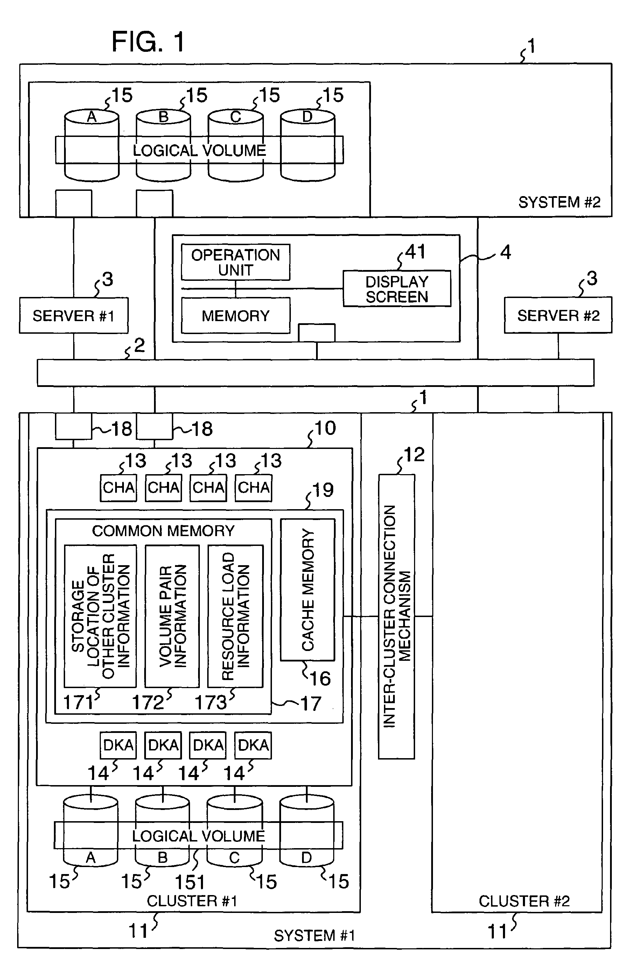

Fig. 1 is a block diagram illustrating an example of a computer system to which the present invention is applied. The computer system includes two cluster-constituted storage apparatus systems 1 (hereinafter referred to as system #1 and system #2, respectively), computers (hereinafter referred to as server) 3 that uses data stored in the cluster-constituted storage apparatus system 1 and a computer (hereinafter referred to as user input/output apparatus) 4 for managing the cluster-constituted storage apparatus systems, which are connected to one another through a network 2. Further, the user input/output apparatus 4 sometimes functions as a maintenance terminal of the cluster-constituted storage apparatus systems 1. The maintenance terminal may be disposed in the cluster-constituted storage apparatus system 1 or outside thereof. Fig. 1 illustrates an example where the computer system includes two cluster-constituted storage apparatus systems 1, although the number of cluster-constituted storage apparatus systems 1 included in the computer system is not limited to two but any number of cluster-constituted storage apparatus systems may be included in the computer system if the number is plural.

The cluster-constituted storage apparatus system 1 includes a plurality of clusters (that is alternatively referred to as a storage apparatus subsystem) 11 and inter-cluster connection mechanisms 12 for connecting the clusters 11 to each other. Further, the inter-cluster connection mechanism 12 is constituted by a switch, for example.

The clusters 11 each include a controller 10, a plurality of disk apparatuses 15 and one or a plurality of ports 18. The clusters 11 are each connected to the server 3 which is a computer of higher rank and the user input/output apparatus 4 through the network 2.

The controller 10 includes a plurality of memory units 19, a plurality of channel adapters (hereinafter abbreviated to CHA) for controlling input/output between the controller and the server 3 or the user input/output apparatus 4 connected to the network 2 through the port and a plurality of disk adapters (hereinafter abbreviated to DKA) connected to the plurality of disk apparatuses to control input/output with respect to the disk apparatuses.

The CHA 13 and the DKA 14 are processors provided in the controller 10. The CHA 13 makes analysis of commands inputted to the cluster 11 from the server 3 through the port 18 and execution of a program for controlling transfer of data between the server 3 and the cluster 11. When the cluster-constituted storage apparatus system 1 receives a command from the server 3 which is executing an operating system of a so-called open system and must execute processing in response to the command, a hardware and a program required to overcome difference of the interface between the server 3 and the cluster-constituted storage apparatus system 1 are further added as constituent elements of the CHA.

The DKA 14 executes a program for making generation of parity data, control of a disk array composed of a plurality of disk apparatuses and control of data transfer between the disk apparatus 15 and the controller 10. The disk apparatus 15 includes a plurality of ports, which are connected to different DKAs 14 through a plurality of paths, respectively. Accordingly, the plurality of DKAs 14 can access to the same disk apparatus 15.

The memory unit 19 includes a common memory 17 and a cache memory 16 to which the processors of CHA and DKA can access. The processors store information necessary for management of jobs executed by the processors, management information of the cache memory and data to be shared with the processors into the common memory 17. Resource load information 173 in the cluster, volume pair information 172 and information 171 indicating a storage location of other cluster information required in cooperation between clusters are stored in the common memory 17. The pair means a set of a storage area in which data to be copied is stored (hereinafter referred to as "source volume") and a storage area in which copied data is stored (hereinafter referred to as "target volume").

Information to be stored in the common memory 17 may be stored in the common memory 17 of one cluster in the cluster-constituted storage apparatus system 1 collectively or the same information may be stored in the respective common memories 17 of the plurality of clusters redundantly. In the embodiment, information is dispersed for each cluster to be stored. The memory unit 19 is duplicated in each cluster and data stored in the common memory and the cache memory are also duplicated in each cluster.

The cluster 11 (cluster #1) can notify information to another cluster (e.g. cluster #2) in the same cluster-constituted storage apparatus system 1 (system #1) through the connection mechanism 12 and the cluster #2 can refer to information stored in the cluster #1 directly. Further, the cluster 11 can notify information to the server 3 through the network 2.

When the user employing the cluster-constituted storage apparatus system 1 causes the cluster-constituted storage apparatus system 1 to execute the remote copy processing, the user input/output apparatus 4 is used in order to indicate the target volume to the cluster-constituted storage apparatus 1. Concretely, the user input/output apparatus is a maintenance terminal for SVP (Service Processor) or the like. The user input/output apparatus 4 has a display screen 41. The user input/output apparatus 4 displays candidates of the volumes for copied data onto the display screen 41 to indicate them to the user so that visual support is made to the user when the user selects the target volume. Further, the server 3 and the user input/output apparatus 4 may be the same computer.

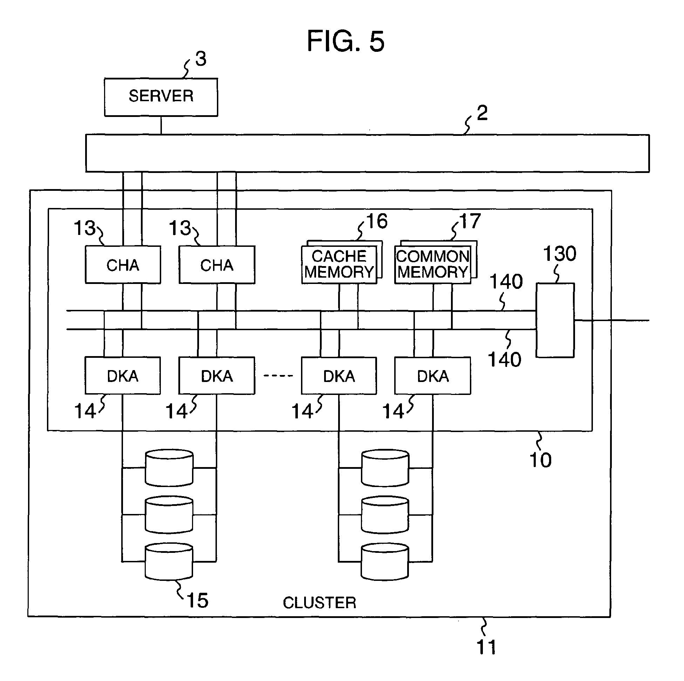

Fig. 5 illustrates an example of a configuration of the cluster 11. The cluster 11 includes a plurality of disk apparatuses 15 and a control134 10. The controller 10 includes the plurality of CHAs 13, the plurality of DKAs 14, a plurality of common memories 17, a plurality of cache memories 16 and a data transfer controller 130 for allowing the cluster 11 to communicate with another cluster in the same cluster-constituted storage apparatus system 1. The plurality of CHAs, the plurality of DKAs, the plurality of common memories, the plurality of cache memories and the data transfer controller 130 are connected to one another through a path (communication path) 140. In Fig. 5, two paths 140 are provided in order to improve the reliability of the cluster and the CHAs, the DKAs, the cache memories, the common memories and the data transfer controller are connected to both paths 140. The plurality of disk apparatuses 15 are each connected to the plurality of DKAs.

The disk apparatus 15 is a hardware having a physical storage area. The server 3 manages the storage areas while a logical storage area obtained by logically dividing the physical storage areas provided in the plurality of disk apparatuses 15 is defined as a unit and uses the storage areas. Each of the divided logical storage areas is named a logical volume 151. The capacity and the physical position (that is, the physical storage area corresponding to the logical volume) in the cluster-constituted storage apparatus system 1 of the logical volume 151 can be designated by the user by means of the user input/output apparatus 4 or the server 3. Information indicative of the physical position of the logical volume is stored in the common memory 17.

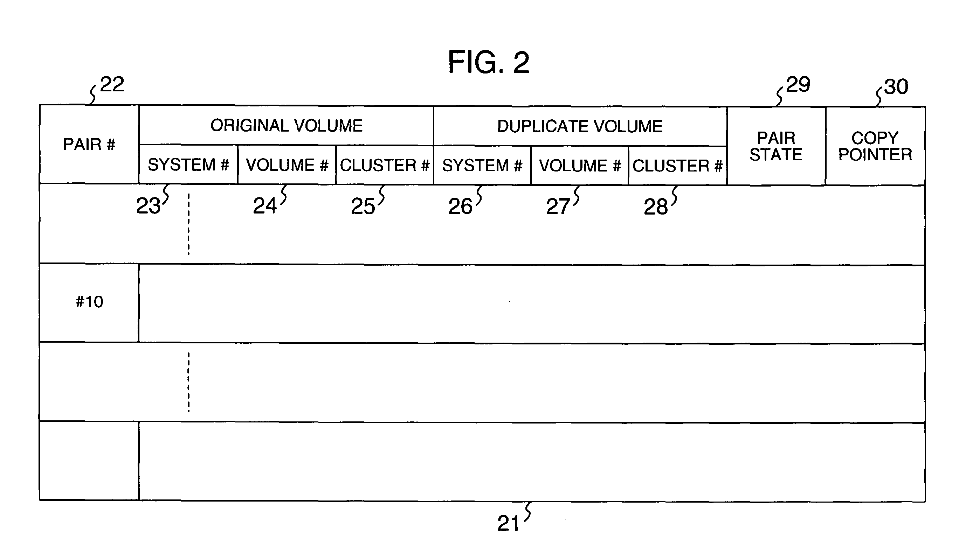

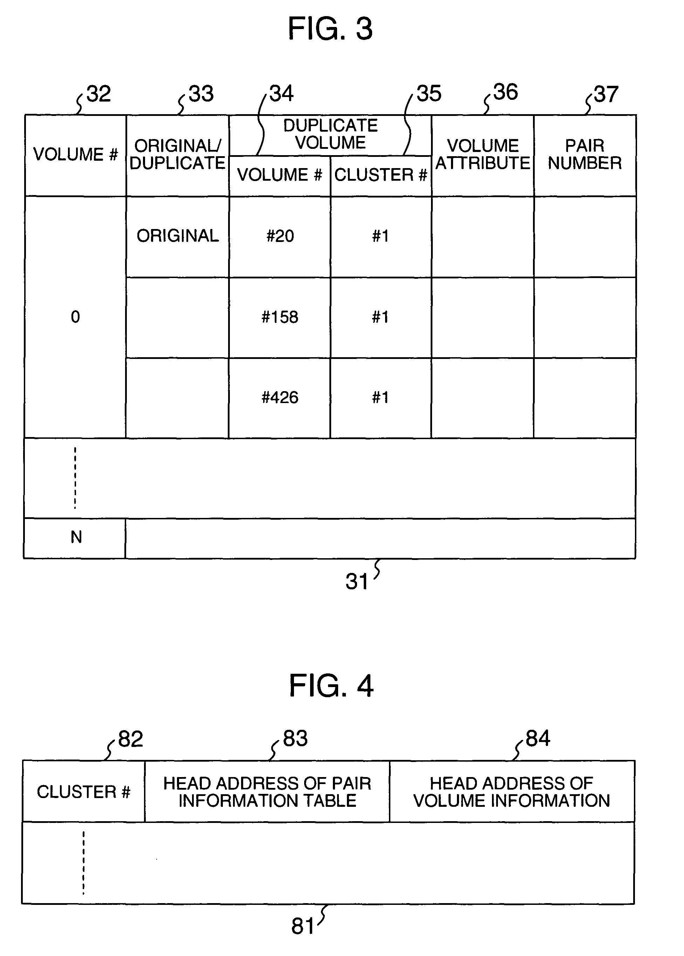

The volume pair information 172 stored in the common memory 17 includes a pair information table 21 and a volume information table 31. Fig. 2 shows an example of the pair information table and Fig. 3 shows an example of the volume information table 31. The pair of copies may be a pair constituted by a set of a plurality of volumes for data to be copied and a plurality of volumes for copied data. The embodiment shows an example where correspondence of the original volume and the duplicate volume are one to one. The volume storing the original data to be copied (that is, source volume) is named the original volume and the volume storing the duplicate data of the original data (that is, target volume) is named the duplicate volume.

The pair information table 21 shown in Fig. 2 includes entries for pair number 22, system number 23 of original volume, volume number 24 of original volume, cluster number 25 of original volume, system number 26 of duplicate volume, volume number 27 of duplicate volume, cluster number 28 of duplicate volume, pair state 29 and copy pointer 30.

Identifier indicating the pair of original volume and duplicate volume, concretely, the pair number is registered in the pair number 22. Information indicating the original volume constituting the corresponding pair, that is, the system number which is the identifier of the cluster-constituted storage apparatus system 1 to which the original volume belongs, the volume number which is the identifier for identifying the original volume and the cluster number which is the identifier of the cluster to which the original volume belongs are registered in the system number 23, the volume number 24 and the cluster number 25 of the original volume, respectively. The system number which is the identifier of the cluster-constituted storage apparatus system 1 to which the duplicate volume belongs, the volume number which is the identifier of the duplicate volume and the cluster number which is the identifier of the cluster managing the duplicate volume are registered in the system number 26, the volume number 27 and the cluster number 28 of the duplicate volume in the same manner as the original volume. Information concerning the state of the pair indicating whether the corresponding pair is being copied or has been copied is registered in the pair state 29. Information indicating the area of the original volume of the corresponding pair, in which data has been already copied to the duplicate volume, is registered in the copy pointer 3.

Information used in the remote copy processing is registered in the volume information table 31 shown in Fig. 3. In the embodiment, the volume information table 31 is prepared for each cluster. The volume information table 31 includes entries for volume number 32, original/duplicate 33, volume number 34 of duplicate volume, cluster number 35 of duplicate volume, volume attribute 36 and pair number 37.

The volume number which is the identifier for specifying a certain storage area (hereinafter referred to as volume) provided in the cluster-constituted storage apparatus system 1 is registered in the volume number 32. Information indicating whether the corresponding volume is original or duplicate is registered in the original/duplicate 33. When the corresponding volume is original, information concerning the duplicate volume paired therewith is registered in the volume information table. That is, the volume number which is the identifier of the corresponding duplicate volume is registered as the entry for the volume number 34 and the cluster number which is the identifier of the cluster managing the duplicate volume is registered as the entry for the cluster number 35. Attribute information such as format, capacity and state of the volume corresponding to the volume number 32 is registered as entry for the volume attribute 36. The attribute information is used when it is judged whether the corresponding volume can be set as the target volume for the remote copy or not. Fig. 3 shows the case where three pairs are produced for the volume having the volume number of 0 by way of example. In the case of Fig. 3, the companions paired with the volume having the volume number of 0 are defined to be volumes having the volume numbers 20, 158 and 426 of the cluster having the cluster number of 1.

In the embodiment, in order to realize the remote copy between the cluster-constituted storage apparatus systems 1, the plurality of clusters 11 in the cluster-constituted storage apparatus system 1 each include the pair information table 21 and the volume information table 31. Information of all the volumes provided in the cluster 11 having the volume information table 31 is stored in the volume information table 31. Further, information concerning all the pairs of the volumes provided in the cluster 11 having the pair information table 21 which are the original or duplicate volumes is registered in the pair information table 21.

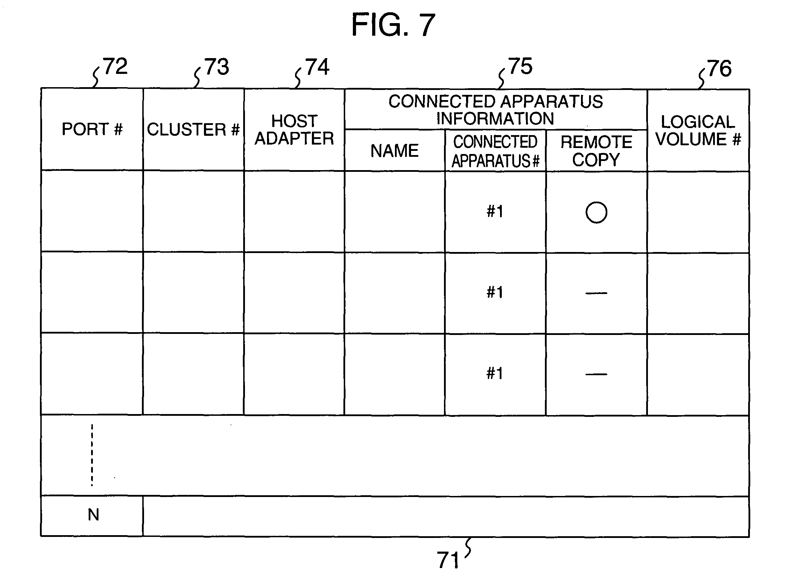

Fig. 7 shows an example of a port management information table 71. The port management information table 71 is stored in the common memory 17 of one or the plurality of clusters of the cluster-constituted storage apparatus systems 1. Information indicating the apparatuses to which the ports included in the cluster-constituted storage apparatus system 1 are connected is registered in the port management information table 71. That is, for each port number 72 which is the identifier of each port provided in the cluster-constituted storage apparatus system, the cluster number 73 which is the identifier of the cluster including the port, the host adapter number 74 which is the identifier of the CHA controlling the port, the connected apparatus information 75 for specifying the apparatus to which the port is connected and one or plurality of logical volume numbers 76 for identifying one or plurality of logical volumes to be accessed by means of the port are stored in the port management information table 71. The connected apparatus information 75 includes information such as "host", "storage apparatus system" and "no connection" which are information indicative the kind of the apparatus to which the corresponding port is connected and the connected apparatus number which is the identifier for identifying the connected apparatus. If the name of the connected apparatus is "host" and the port is connected to the host computer, the number for specifying the host computer is set as the connected apparatus number. Further, if the name of the connected apparatus is "storage apparatus system" and the port is connected to the cluster-constituted storage apparatus system, for example, the path number of the cluster in the cluster-constituted storage apparatus system for the connected apparatus is set as the connected apparatus number.

Fig. 4 shows an example of information indicating the storage location 171 of other cluster information stored in the common memory 17. The storage location 171 of other cluster information includes a memory space correspondence table (not shown) and a storage location table 81 of other cluster information.

The memory space of the common memory 17 included in each cluster 11 of the cluster-constituted storage apparatus system 1 (that is, memory space of the plurality of common memories provided in the cluster-constituted storage apparatus system) is treated as one virtual memory space as a whole. In this case, the memory space of the common memory provided in each cluster 11 may be assigned to the virtual memory space continuously or scatteringly. A memory space correspondence table indicating the correspondence relation of address indicative of memory area in the virtual memory space and address indicative of memory area in the physical memory space (that is, memory area in the real common memory) is stored in the common memory of each cluster.

Fig. 4 shows an example of the storage location table 81 of other cluster information used to access to the pair information table 21 and the volume information table 31 stored in the common memory included in other cluster. The storage location table 81 of other cluster information includes entries for cluster number 82, head address 83 of the pair information table and head address 84 of the volume information table. The cluster number which is the identifier for specifying the cluster is registered as the entry for the cluster number 82. The head address indicating the storage location of the pair information table in the memory space of the virtual common memory is registered as the entry for the head address 83 of the pair information table. The head address indicating the storage location of the volume information table in the memory space of the virtual common memory is registered as the entry for the head address 84 of the volume information table.

When the processing for copying data of the original volume to the duplicate volume is executed by the remote copy, it is necessary that the CHA 13 or DKA 14 refers to or updates information stored in the pair information table 21 or the volume information table 31 of other cluster. In this case, the CHA 13 or the DKA 14 refers to the storage location table 171 of other cluster information on the basis of the cluster number of the cluster to which the pair or the volume indicated by information desired to be referred to belongs, so that the CHA 13 or the DKA 14 calculates a location of the storage area in the common memory in which information concerning the corresponding pair or volume is registered.

For example, the volume information for the volume having, for example, the cluster number 1 and the volume number 4 (that is, information concerning the volume of information registered in the volume information table 31) is stored in the storage area in the virtual common memory indicated by the address calculated by the following expression:

$$\text{(Storage Location of Volume Information for}$$

$$\text{Volume Number 4 of Cluster Number 1)} = \{(\text{Head Address}$$

$$\text{of Volume Information Table for Cluster Number 1)} +$$

$$\text{(Information Content per Volume)}\} \times 4 \qquad (1)$$

Accordingly, the CHA or DKA calculates an address in the virtual common memory space in accordance with the above expression (1) and obtains an address in the physical memory space of the real common memory by making reference to the memory space corresponding table on the basis of the address in the virtual common memory space. Then, the CHA or DKA uses the address in the physical memory space to access to volume information and accordingly can also access to volume information stored in the common memory in another cluster.

Even with regard to the pair information (that is, information concerning any pair among the information stored in the pair information table), the CHA or DKA can access to the pair information stored in the common memory in another cluster in the same manner as the volume information.

By treating the common memory 17 as one memory space virtually as described above, the CHA 13 or DKA 14 can refer to and update the information stored in the common memories 17 of all the clusters 11 provided in the cluster-constituted storage apparatus system 1.

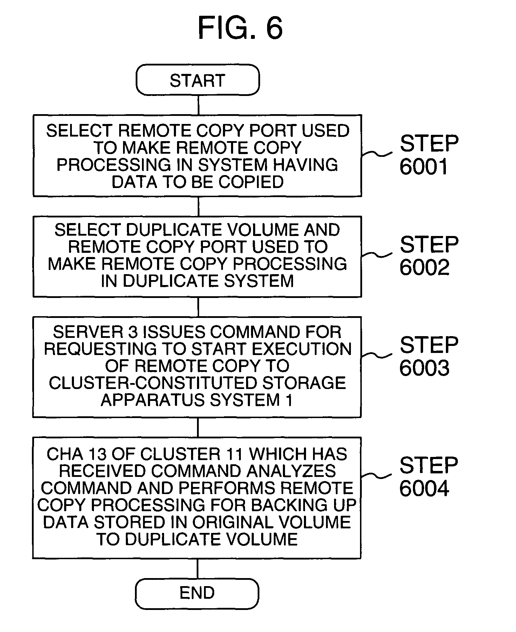

Fig. 6 is a flow chart showing an example of a procedure of backing up the volume of the cluster-constituted storage apparatus system 1 (system #1) to the volume of another cluster-constituted storage apparatus system 1 (system #2).

First, it is necessary to select a port for remote copy used to make remote copy processing from the ports of the system #1 (i.e. original system ) having the source volume. The system #1 notifies a load state of each of one or the plurality of remote copy ports usable for the remote copy processing from the ports 18 provided in the system #1 to the user input/output apparatus 4. The user input/output apparatus 4 supplies the notified load state to the display screen 41 to indicate the load state to the user, so that the user selects a port used for the remote copy from the remote copy ports on the basis of the indicated information. The user inputs the identifier of the selected port to the user input/output apparatus 4, so that the user input/output apparatus 4 transmits the inputted identifier of the port to the system #1 (step 6001). Further, the original system (system #1) may analyze the load state and the idle state of the remote copy ports to narrow the ports used for the remote copy down to candidate ports and notify the candidate port information to the user input/output apparatus 4 so that the port used by the user may be selected from the candidate ports indicated by the user input/output apparatus 4. Moreover, the system #1 may analyze the load state and the idle state of the remote copy ports and select the port used for the remote copy on the basis of the analyzed result.

Next, the user employs the user input/output apparatus 4 to select the duplicate volume in which data to be backed up is stored and the remote copy port used to make the remote copy processing in the duplicate system (step 6002). In the same manner as step 6001, even in step 6002, the load state of the remote copy port provided in the cluster-constituted storage apparatus system (system #2) on the duplicate side is indicated to the user by means of the user input/output apparatus 4 and the user selects the remote copy port on the basis of the indicated information. Further, it is a matter of course that the duplicate-side system (system #2) may analyze the load state and the idle state of the remote copy ports and select the port used for the remote copy on the basis of the analyzed result. Further, in step 6002, the user selects the duplicate volume and registers the original and duplicate volumes as the remote copy pair in the pair information table 21 stored in the common memory in the systems #1 and #2 by means of the user input/output apparatus 4 (step 6002).

Next, the server 3 designates a pair and makes the cluster-constituted storage apparatus system 1 execute the copy processing for the pair. More particularly, the server 3 issues a command for requesting starting to execute the remote copy to the cluster-constituted storage apparatus system 1. This command is issued to the cluster 11 in the cluster-constituted storage apparatus system 1 (system #1) having the original volume of the pair designated by the server 3 (step 6003).

The CHA 13 of the cluster 11 which has received the command analyzes the command and performs the remote copy processing for backing up the data stored in the original volume to the duplicate volume (step 6004).

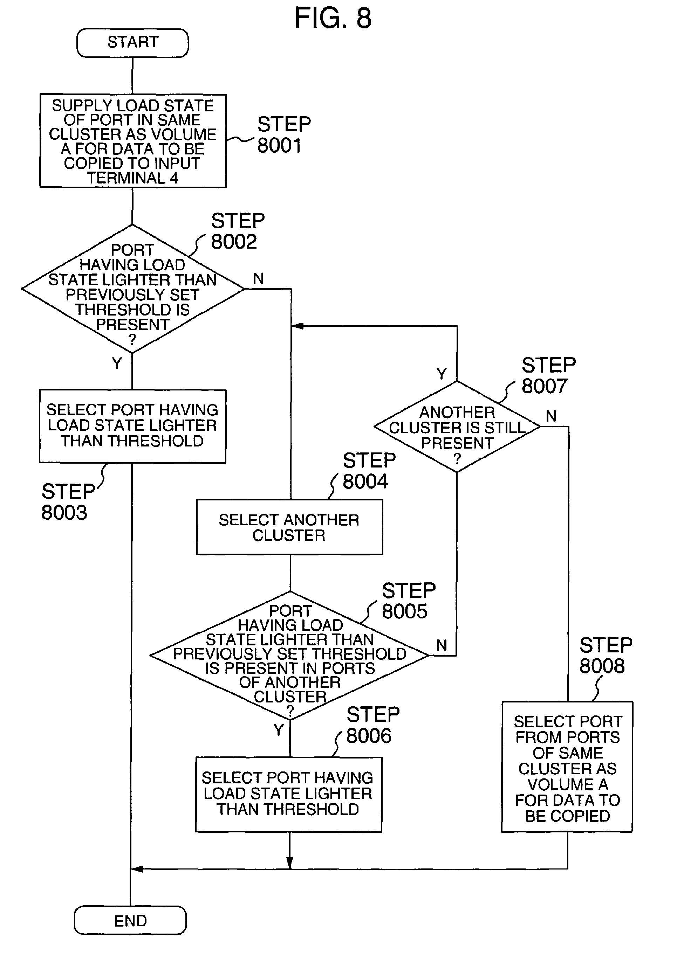

Referring now to the flow chart shown in Fig. 8, an example of the procedure of selecting the remote copy port used for the remote copy processing in step 6001 of the remote copy processing shown in Fig. 6 is described. Fig. 8 is the flow chart showing an example of the selection procedure of the remote copy port. Fig. 8 shows an example of the method in which the user previously transmits the condition that "the port used for the remote copy is preferentially selected from the ports in the cluster to which the source volume belongs" to the original-side system (system #1) from the user input/output apparatus 4 so that the remote copy port is selected in accordance with this condition.

In the embodiment, it is premised that the ports are classified into the remote copy ports and usual I/O ports in accordance with setting of ports and control processors are also classified into those for remote copy and for usual I/O. However, the present invention is not limited to such premise and both the remote copy processing and the usual I/O processing may be executed by the same port.

The cluster-constituted storage apparatus system 1 (system #1) on the duplicate side obtains the load states of the remote copy ports in the cluster (cluster #1) including a volume A which is the source volume (i.e. original volume) at previously set intervals or at intervals designated from the user input/output apparatus 4 and supplies the load states to the user input/output apparatus 4 (step 8001).

The user judges whether a port having the load state lighter than a previously set threshold is present in the remote copy ports in the cluster #1 or not (step 8002). When the port having the load state lighter than the threshold is present, the user selects the port as the port used for the remote copy (step 8003).

When there is no port having the load state lighter than the threshold in the cluster #1, the user selects one cluster from other clusters in the original-side system (system #1) and supplies the identifier of the selected cluster (cluster #2) to the user input/output apparatus 4 (step 8004). The original-side system (system #1) which has received the identifier of other cluster from the user input/output apparatus 4 obtains the load state of the remote copy ports included in the cluster #2 in the same method as step 8001 and supplies the load state to the user input/output apparatus 4 again. The user refers to an output picture of the user input/output apparatus 4 to judge whether a port having the load state lighter than the threshold is present in the remote copy ports in the cluster #2 (step 8005). When the remote copy ports having the load state lighter than the threshold are present, the user selects a port actually used for the remote copy processing therefrom and transmits the identifier of the port to the original-side system (system #1) by means of the user input/output apparatus 4 (step 8006).

When the load states of all the remote copy ports in the cluster #2 are heavier than the threshold, the system #1 judges whether any cluster other than the clusters #1 and #2 is present in the original-side system (system #1) and when other clusters are present, the processing proceeds to step 8004 (step 8007). When there is no other cluster that is not yet selected, the original-side system (system #1) selects the remote copy port 18 having the lightest load from the remote copy ports in the cluster #1 and supplies the identifier of the selected port to the user input/output apparatus 4 to notify the user of it (step 8008).

According to the above processing, the port number for the remote copy, the number of the cluster to which the port belongs and the load state of the ports are displayed in accordance with the condition designated by the user (in the example shown in Fig. 8, the condition that the port actually used in the remote copy processing is preferentially selected from the remote copy ports existing in the cluster to which the volume for data to be copy belongs) and the user can select the port actually utilized for the remote copy from the candidate ports indicated in the picture by means of the input terminal of the input/output apparatus 4. As the display method, there is a method of indicating the load information and the like about all of the candidate ports once or a method in which the cluster-constituted storage apparatus system 1 previously excludes unusable ports and the ports having heavy load from the candidate ports and indicates information of the ports except them in the output picture of the user input/output apparatus 4.

When the candidate ports are narrowed down by the cluster-constituted storage apparatus system 1 to be indicated to the user input/output apparatus 4, the user selects or designates the criterion or condition for narrowing down the candidate ports to be previously notified to the cluster-constituted storage apparatus system 1, so that the cluster-constituted storage apparatus system 1 narrows down the candidate ports on the basis of the notified criterion.

Instead of causing the user to select the port used for the remote copy from the candidate ports like the example shown in Fig. 8, the program stored in the common memory of the cluster-constituted storage apparatus system 1 may be executed by the controller 10 so that the controller 10 of the cluster-constituted storage apparatus system 1 acquires the load information indicative of the load states of the ports and automatically selects the port having the light load in accordance with the judgment procedure shown in Fig. 8. Further, the program stored in the memory of the user input/output apparatus 4 may be executed by the operation unit of the user input/output apparatus 4 so that the user input/output apparatus 4 may select the port used for the remote copy in accordance with the judgment procedure shown in Fig. 8, for example.

Further, when the remote copy port of the duplicate system (system #2) including the target volume (i.e. duplicate volume) is selected, the same processing as shown in Fig. 8 is executed.

The load state of the remote copy port in the cluster-constituted storage system 1 is judged by the CHA on the basis of the number of remote copy processing requests assigned to the remote copy port (that is, remote copy processing requests not to be processed currently but to be executed by the remote copy port). The remote copy processing requests are stored in a remote copy processing request queue in the common memory 17. The more the unexecuted remote copy processing requests are stored in the remote copy processing request queue, the heavier the load of the remote copy port is to be judged. The predicted result of the load state may be reflected.

Further, even if it looks at a glance as if the load is heavy, the load of the port is sometimes increased due to irregularly inputted requests. In this case, it is necessary to consider that such a heavy load state is not continued. Further, it is considered that the periodicity of the past load state is utilized to presume the load state in future.

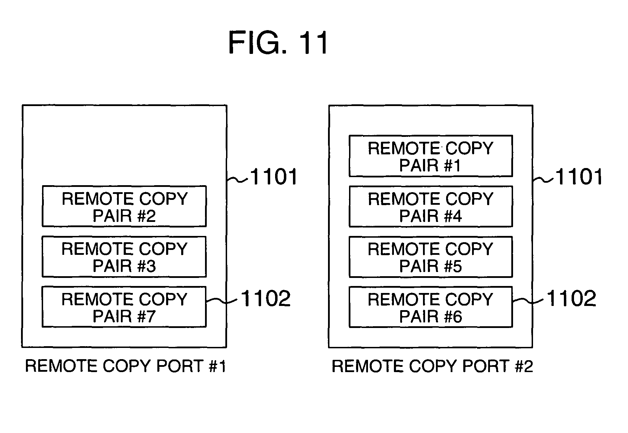

Fig. 11 is a diagram showing an example of the remote copy processing request queue provided for each remote copy port. In the example shown in Fig. 11, the total number of the remote copy processing requests 1102 stored in the remote copy processing request queue 1101 for the remote copy port #2 is larger than that of the remote copy port #1 and accordingly it is judged that the load of the remote copy port #2 is heavy.

When the load of the remote copy port is judged, the priority can be considered. For example, when the priority (priority 2) of the remote copy pair #7 which is the remote copy processing request for the remote copy port #1 is higher than that of another remote copy processing request (priority 1), it is sometimes judged that the load for the remote copy port #1 is heavy. It is supposed that the larger the number of the priorities is the higher the priority is and the priority is usually 1.

Further, when the load of the remote copy port is judged, the amount of data to be copied can be considered. For example, when the amount of data to be copied of the remote copy pair #2 which is the remote copy processing request of the remote copy port #1 is large, it takes a long processing time even for one request and accordingly there is the possibility that it is judged that the remote copy port #1 has a heavy load.

Further, in case of formation copy processing executed when the pair volume is first prepared, since the copy processing of the whole volume is performed, it is anticipated that some writing processing of the same data unit is continued.

Accordingly, for example, the rule that a request of the priority 2 corresponds to three requests of the priority 1 may be decided by the user from his experience and be inputted to the cluster-constituted storage apparatus system 1 from the user input/output apparatus 4 to be set therein or such information may be set inside as an initial value. Further, contents in the remote copy processing request queue may be displayed on the display screen 41 of the user input/output apparatus and the priority of the remote copy processing request may be judged by the user in accordance with the contents of the remote copy processing request registered in the queue on each occasion to be set in the cluster-constituted storage apparatus system 1. For example, when the remote copy processing request has a large amount of data to be copied or is the formation copy request, it is considered that the priority of the remote copy processing request is set to be high.

In the embodiment, the user decides the remote copy port to be selected, while there is a case where the program stored in the common memory of the cluster-constituted storage apparatus system is executed by the controller 10 so that the cluster-constituted storage apparatus system selects the remote copy port to be used for the remote copy.

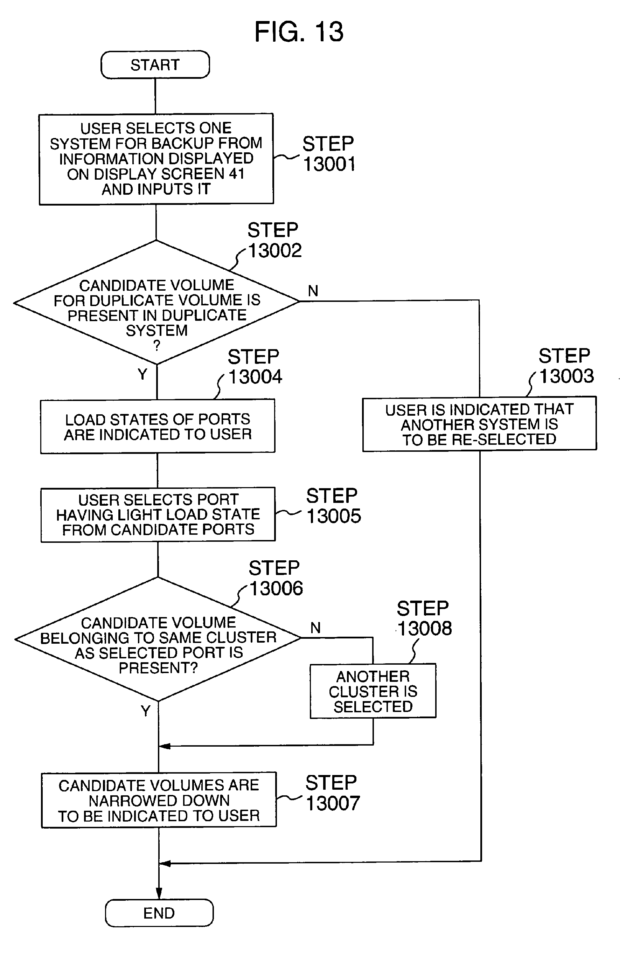

Referring now to the flow chart of Fig. 13, the selection method of the volume for backed-up data (i.e. duplicate volume) which is processing in step 6002 of Fig. 6 is described. In the embodiment, the case where the configuration of the cluster-constituted storage apparatus system 1 for backed-up data(i.e. duplicate side) is the same as that for data to be backed up is described by way of example, while the configuration of the cluster-constituted storage apparatus system for backed-up data may be any one. Further, the storage apparatus system for backed-up data is not necessarily required to be one having the cluster configuration.

In the embodiment, the cluster-constituted storage apparatus system (system #2) on the duplicate side and the user input/output apparatus 4 supports selection of the duplicate volume by the user. That is, when the user selects the duplicate volume, the system #2 and the user input/output apparatus 4 supports selection of the duplicate volume so that the load state of the ports in the cluster-constituted storage apparatus system on the duplicate side which executes the remote copy can be considered and the remote copy is implemented by the CHA having the port of light load.

When there are a plurality of cluster-constituted storage apparatus systems on the duplicate side, each of the cluster-constituted storage apparatus systems on the duplicate side notifies the installation places and the operating states of the cluster-constituted storage apparatus systems on the duplicate side to the user input/output apparatus 4, so that the user input/output apparatus 4 displays the notified information on the display screen 41. The user selects a cluster-constituted storage apparatus system for backup from the information displayed on the display screen 41 and inputs the identifier of the selected cluster-constituted storage apparatus system by means of the input unit (not shown) connected to the user input/output apparatus 4 (step 13001).

The user's selected result is transmitted from the user input/output apparatus 4 through the network 2 to each of the cluster-constituted storage apparatus systems on the duplicate side. The cluster-constituted storage apparatus system selected by the user as the system for backup examines whether the candidate volumes for the duplicate volume are present in its own cluster-constituted storage apparatus system or not (step 13002). The candidate volumes are required to be an idle volume and have the capacity larger than that of the source volume. The cluster-constituted storage apparatus system 1 on the duplicate side transmits the list of the candidate volumes and the clusters of the cluster-constituted storage apparatus systems in which the candidate volumes exist to the user input/output apparatus 4. Further, when there is only one cluster-constituted storage apparatus system on the duplicate side, the processing may be started from the step 13002 in which the cluster-constituted storage apparatus system on the duplicate side transmits the candidate volume list to the user input/output apparatus 4 without execution of step 13001.

When there is no candidate volume in step 13002 and the cluster-constituted storage apparatus system 1 transmits information to the effect to the user input/output apparatus 4, the user input/output apparatus 4 displays the information received from the cluster-constituted storage apparatus system on the display picture 41 so that the selected cluster-constituted storage apparatus system on the duplicate side notifies the user that it cannot be used as that for remote copied data and the user input/output apparatus 4 displays information to the effect that another cluster-constituted storage apparatus system is to be re-selected as that for remote copied data to indicate it to the user (step 13003).

When there is the candidate volume in step 13002, the cluster-constituted storage apparatus system on the duplicate side examines the number of unexecuted remote copy processing requests for each port to thereby obtain the load states of the remote copy ports in the cluster-constituted storage apparatus system on the duplicate side and transmit them to the user input/output apparatus 4. The user input/output apparatus 4 outputs the received load states of the remote copy ports onto the display screen 41 to be indicated to the user (step 13004).

The user refers to the load states of the remote copy ports outputted onto the display screen 41 and selects a port having a light load state as the port on the duplicate side used for the remote copy (step 13005). The selected result is inputted from the input/output unit to the user input/output apparatus 4 by the user.

The user input/output apparatus 4 which has received the selected result executes the program stored in the memory by means of the operation unit and judges whether the candidate volume belonging to the same cluster as that of the selected port is present or not with reference to the list of candidate volumes received from the cluster-constituted storage apparatus system on the duplicate side in step 13002 (step 13006). When the candidate volume is present, the operation unit of the user input/output apparatus 4 executes the program in the memory to thereby indicate all of the candidate volumes to the user or select the candidate volumes and indicate the previously decided number of candidate volumes to the user. The candidate volumes may be selected at random or from a small volume number in order (step 13007). When the candidate volume belonging to the same cluster as that of the port selected by the user is not present, the user input/output apparatus 4 indicates candidate volumes in another cluster to the user. All of candidate volumes may be indicated in the same manner as step 13007 or the previously decided number of candidate volumes may be indicated (step 13008).

In the embodiment, selection of the duplicate volumes by the user is supported so that the duplicate volume and the port used for remote copy on the duplicate side exist in the same cluster, although selection of the duplicate volumes by the user may be supported so that the duplicate volume and the remote copy port exist in separate clusters.

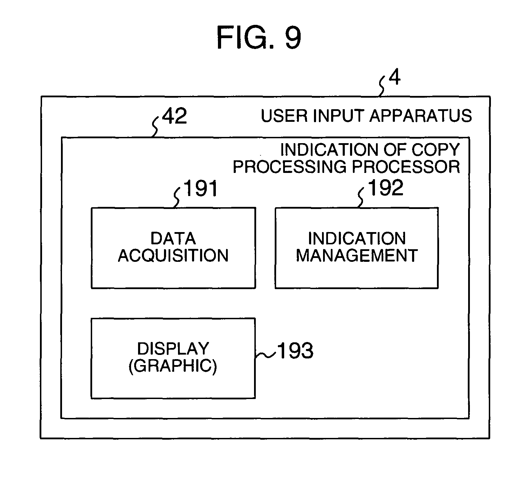

Referring now to Fig. 9, the method that the user input/output apparatus 4 obtains information concerning the remote copy port and the volume in the cluster-constituted storage apparatus system and indicates it to the user is described. Fig. 9 is a diagram showing an example of the program stored in the memory of the user input/output apparatus 4.

The operation unit of the user input/output apparatus 4 executes the program for indicating the target volume shown in Fig. 9 to thereby obtain information concerning the ports and the volumes in the cluster-constituted storage apparatus system and provide information of the volume for remote copied data and the remote copy port used for the remote copy processing to the user. The user input/output apparatus 4 is concretely PC or note-type PC, for example.

The user input/output apparatus 4 makes exchanges of the control information such as load state of each cluster between the cluster-constituted storage apparatus system and the user input/output apparatus through the network 2. The user input/output apparatus 4 is directly connected to each cluster 11 provided in the cluster-constituted storage apparatus system 1 through the exclusive lines and the control information may be transmitted and received through the exclusive line. In this case, there is the merit that exchanges of the control information between the user input/output apparatus 4 and the cluster-constituted storage apparatus system 1 does not influence the traffic load on the network 2.

A volume-for-copied-data indicating program 42 shown in Fig. 9 includes sub-programs including a data acquisition program 191 for acquiring information of the remote copy ports and the volumes in the cluster-constituted storage apparatus system 1, an indication management program 192 for selecting a port indicated to the user on the basis of the acquired information and various conditions (for example, the source volume and the port used for the remote copy exist within the same cluster and the like) and a display program 193 for displaying the indicated port on the display screen 41.

The data acquisition program 191 is executed when information of the ports and the volumes provided in the cluster-constituted storage apparatus system 1 is acquired. When the data acquisition program 191 is executed, information of all the ports and the idle volumes in the cluster-constituted storage apparatus system 1 is acquired. The information of the ports acquired by execution of the data acquisition program 191 includes the installation cluster number which is the identifier of the cluster to which the port belongs, the use situation of the port, the number of unprocessed remote copy processing requests to be executed in the port and the like. The information of the volume acquired by execution of the data acquisition program 191 includes the identifier of the idle volume, the volume capacity of the idle volume and the like.

When the data acquisition program 191 is executed, a dedicated command is transmitted from the user input/output apparatus 4 to the cluster-constituted storage apparatus system. The CHA 13 which has received the command accesses to the resource load information 173 stored in the common memory 17 to acquire the information of the idle volume and the load information of the port so that the acquired information is transmitted to the user input/output apparatus 4 by means of the CHA.

The CHA which has received the command may narrow down the ports and the volumes in accordance with the condition previously set in the cluster-constituted storage apparatus system 1 such as, for example, the condition that "the ports are to exist in the same cluster as the duplicate volume" and only information concerning the narrowed ports and volumes may be transmitted to the user input/output apparatus 4. With this method, the load on the user input/output apparatus 4 is reduced. Further, the CHA may transmit information concerning all of the ports in the cluster-constituted storage apparatus system 1 to the user input/output apparatus 4 and the user input/output apparatus 4 may execute the indication management program 192 to thereby output information of the ports to be indicated to the user on the display screen 42 and narrow it by means of processing of the indication management program.

The display program 193 is a program executed in order to output information concerning the candidate volumes and the remote copy ports onto the display screen 41 and indicate the volumes and the ports used for the remote copy processing to the user visually.

The remote copy processing performed in step 6004 of Fig. 6 is now described.

When the pair of original and duplicate volumes is set in the original-side cluster-constituted storage apparatus system and the duplicate-side cluster-constituted storage apparatus system from the user input/output apparatus 4, data is copied from the original volume to the duplicate volume. The copy of data from the original volume to the duplicate volume performed after the setting of the pair is named formation copy. Further, when a write request is transmitted from the server 3 to the original volume after completion of the formation copy, the original-side cluster-constituted storage apparatus system issues the write request to the duplicate volume. Consequently, write data is copied from the original-side cluster-constituted storage apparatus system to the duplicate-side cluster-constituted storage apparatus system so that the duplicate volume stores data of the same contents as the backup of the original volume. Such copy of data to the duplicate volume accompanied by update of data of the original volume is named update copy.

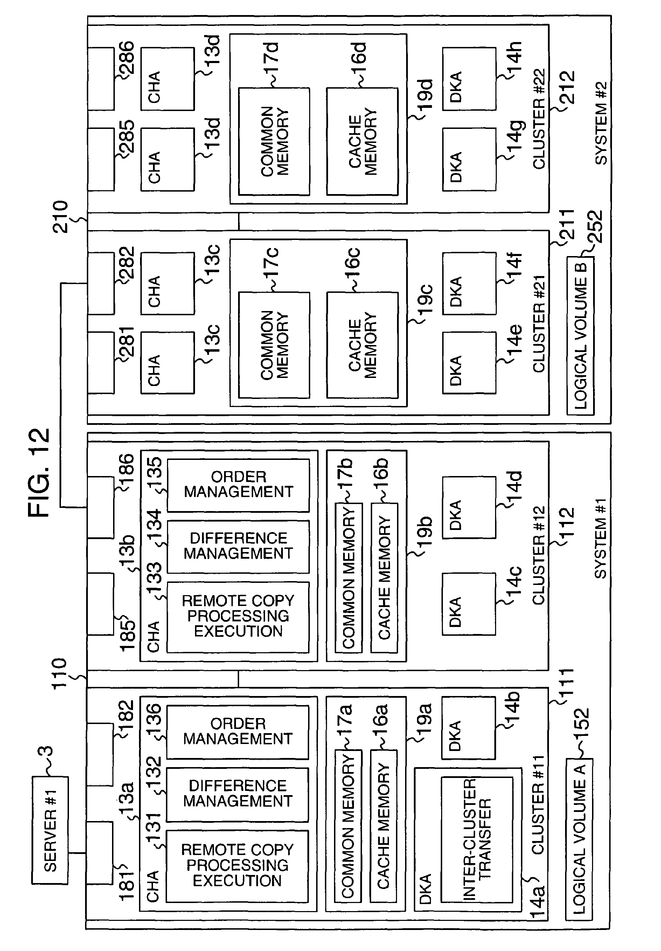

As shown in Fig. 12, for example, it is considered that data is copied from a logical volume A 152 under the cluster #11 (111) of the original-side cluster-constituted storage apparatus system 110 (system #1) to a logical volume B 252 under the cluster #21 (211) of the duplicate-side cluster-constituted storage apparatus system 210 (system #2). It is supposed that a port 182 of the cluster #11 (111), a port 186 of the cluster #12 (112), a port 282 of the cluster #21 (211) and a port 286 of the cluster #22 (212) are set as remote copy ports. Ports 181, 185, 281 and 285 are usual ports for connecting the cluster-constituted storage apparatus system and the server. The remote copy ports are different from the usual ports since the remote copy ports are used to make exchanges of commands between storage systems.

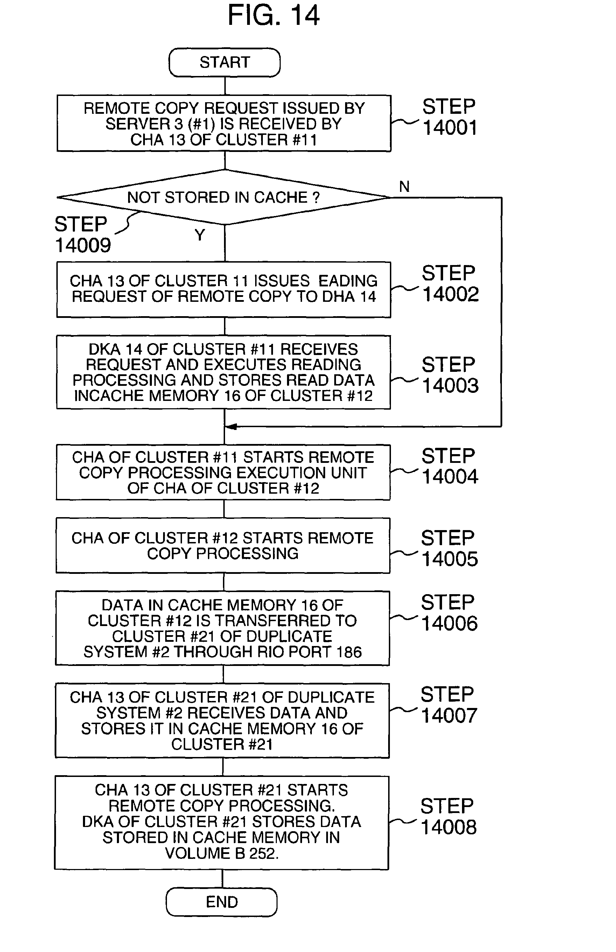

Referring now to the flow chart of Fig. 14, the procedure of executing the formation copy processing through the remote copy ports 186 and 282 is described as an example of the formation copy on condition that the remote copy ports 186 and 282 are connected through a bus in Fig. 12.

A remote copy request between the logical volume A 152 and the logical volume B 252 issued by the server #1 (3) is received by a remote copy processing execution unit 131 of the CHA 13 of the cluster #11 (111) of the cluster-constituted storage apparatus system #1 (110). The remote copy processing unit is realized by executing the remote copy processing program stored in the memory provided in the CHA by means of the processor provided in the CHA. When the remote copy request is received, the remote copy processing execution unit 131 also receives information indicating that the duplicate target volume exists under the cluster #22 (212) of the cluster-constituted storage apparatus system #2 (210) (step 14001).

Next, the remote copy request processing execution unit 131 judges whether data to be copied is stored in the cache memory 16 of the cluster #12 of the cluster-constituted storage apparatus system #1 or not and when the data is not stored in the cache memory (step 14009), the remote copy request processing execution unit 131 issues a reading request of data to be copied to the DKA 14 of the cluster #11 connected to the disk in which data to be copied is stored (step 14002).

The DKA 14 of the cluster #11 receives the reading request from the remote copy request processing execution unit 131 and executes the reading processing. The DKA 14 of the cluster #11 stores the read data in the cache memory 16 of the cluster #12 and notifies the address of the read data to the CHA 13 of the cluster #11 issuing the reading request. The CHA 13 of the cluster #11 records data stored in the cache memory 16 of the cluster #12 by means of a difference management unit 13 (step 14003). The difference management unit 132 is realized by executing a difference management program stored in the memory provided in the CHA 13 by means of the processor provided in the CHA 13. The difference management unit 132 makes management by storing the address of the data stored in the cache memory 16 of the cluster #12 in the common memory provided in the CHA 13.

The remote copy processing execution unit 131 of the CHA 13 of the cluster #11 starts the remote copy processing execution unit 133 of the CHA 13 of the cluster #12 when the remote copy request is received in step 14001 or when the notification to the effect that data is stored in the cache memory 16 of the cluster #12 from the DKA 14 in step 14003 or when a predetermined amount of data is accumulated in the cache memory 16 of the cluster #13. The remote copy processing execution unit 133 may be started by making processor communication between the processor provided in the CHA 13a of the cluster #11 and the processor provided in the CHA 13b of the cluster #12 or may be started by message communication between the CHA 13a of the cluster #11 and the CHA 13b of the cluster #12. Further, the CHA 13a of the cluster #11 may register a job to the CHA 13b of the cluster #12 to start the remote copy processing execution unit 133 (step 14004).

When the remote copy processing execution unit 133 of the CHA 13b of the cluster #12 is started, the remote copy processing is started (14005). Concretely, the remote copy processing execution unit 133 transfers the data stored in the cache memory 16 of the cluster #12 by the cluster #11 into the cache memory 16 of the cluster #21 in the cluster-constituted storage apparatus system #2 on the duplicate side through the remote copy port 186. At this time, it is not limited that the remote copy processing execution unit 133 transmits the data to the cluster #21 in order that the cluster #11 stores the data in the cache memory 16 of the cluster #12. Accordingly, the CHA 13b of the cluster #12 transmits the data to the duplicate-side cluster-constituted storage apparatus system #2 together with the number indicating the order that the cluster #11 stored the data in the cache memory 16 of the cluster #12 or the time that the cluster #12 received the data from the cluster #11 when the CHA 13b of the cluster #12 transfers the data to the duplicate-side cluster-constituted storage apparatus system #2 so as to understand the writing order at the time that the cluster #11 stored the data in the cache memory 16 of the cluster #12 (14006).

In the cluster #21 of the duplicate-side cluster-constituted storage apparatus system #2, the processor in the CHA 13c executes a remote copy processing execution program (not shown) stored in the memory of the CHA 13c so that the cluster #21 of the duplicate-side cluster-constituted storage apparatus system #2 receives the data from the cluster #12 of the original-side cluster-constituted storage apparatus system #1 and stores the data in the cache memory 16c of the cluster #21 (step 14007). The processor of the CHA 13c of the cluster #21 instructs the DKA of the cluster #21 to store the copied data stored in the cache memory 16c in the logical volume B 252. The DKA 14e of the cluster #21 which has received the instruction from the CHA 13c stores the copied data in the logical volume B 252 in order of the time given to the copied data by the cluster #12. Alternatively, in order to store the copied data in the logical volume B252 in order of the number given to the copied data by the cluster #12, each time the DKA 14e secures the copied data to which the consecutive numbers are given, the copied data may be stored in the logical volume B 252 (step 14008).

In the above processing, the cache memory for storing the data read out from the logical volume A 152 of the original-side cluster-constituted storage apparatus system #1 and the CHA and the DKA for executing the remote copy processing may be those provided in any of the cluster #11 or #12 and can be selected therefrom properly without limitation to the above example. The same also applies to the duplicate-side cluster-constituted storage apparatus system #2.

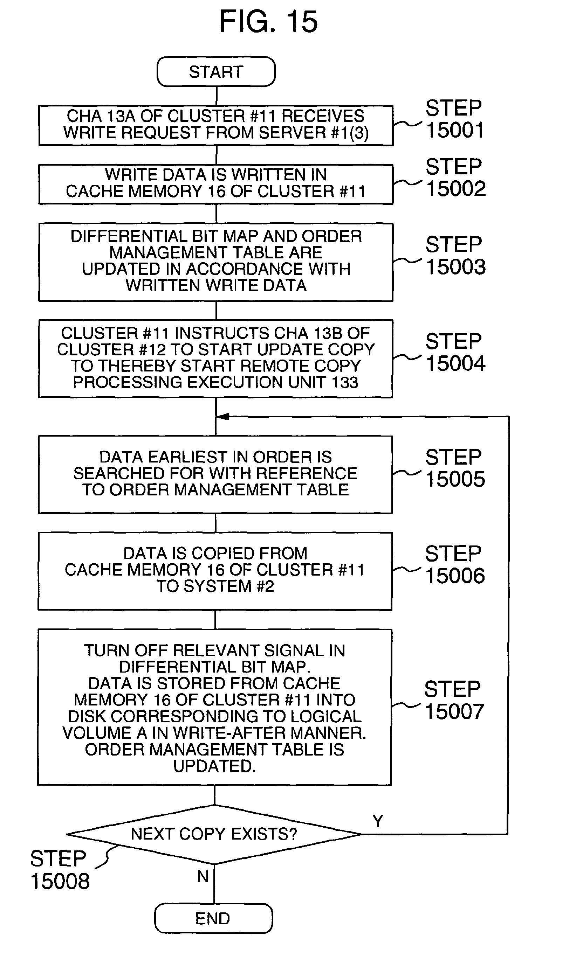

When a data update request is received from the host during execution of the formation copy or after completion of the formation copy, only the update contents are copied to the duplicate-side cluster-constituted storage apparatus system #2. The procedure of such update copy processing is now described with reference to the flow chart of Fig. 15.

The CHA 13a of the cluster #11 receives a write request from the server 3 (step 15001). The CHA 13a writes write data contained in the write request in the cache memory 16 of the cluster #11. In the case of the asynchronous processing, the CHA 13 of the cluster #11 further reports the completion of processing to the higher-rank server 3 after the write data has been written in the cache memory 16 (step 15002).

In the cluster #11, updated data is managed using a differential bit map. In the differential bit map, information indicative of the updated data is set to be on (i.e. "1"). Accordingly, the CHA 13a turns on the information on the differential bit map corresponding to the write data. Further, in order to remote copy the data in order that the write data is received from the higher-rank server 3, an order management unit 136 of the CHA 13a of the cluster #11 manages the order that the write data is received by means of an order management table. Accordingly, the CHA 13a registers the write data in the order management table. The order management unit 136 is realized by executing an order management program stored in the memory of the CHA 13a by means of the processor provided in the CHA 13a. Further, the differential bit map and the order management table are stored in the common memory 17a (step 15003).

Next, the CHA 13a of the cluster #11 instructs the CHA 13b of the cluster #12 to execute the update copy processing so that the remote copy processing execution unit 133 of the CHA 13b is started. In the same manner as in step 14004, there are a plurality of methods in which the cluster #11 starts the remote copy processing execution unit 133 of the CHA 13b in step 15004 (step 15004).

The remote copy processing execution unit 133 of the cluster #12 started as above begins the copy processing. The remote copy processing execution unit 133 of the cluster #12 searches for data earliest in order with reference to the order management table in the cluster #11 (step 15005). The remote copy processing execution unit 133 acquires the earliest-in-order data from the cache memory 16a of the cluster #11 and issues the copy request to the duplicate-side cluster-constituted storage apparatus system #2. At this time, the sequence number indicative of the reception order of the write data and managed in the order management table by the order management unit 136 is also transmitted from the remote copy processing execution unit 133 to the duplicate-side cluster-constituted storage apparatus system #2. Further, the remote copy processing execution unit 133 may be constructed so that the data is once copied to the cache memory 16b of the cluster #12 and the copy request is then issued to the cluster-constituted storage apparatus system #2. In the case of the synchronous processing, the CHA 13a of the cluster 11 reports the completion of write processing to the higher-rank rank server 3 at this time (step 15006).

When it is completed that the copy data is copied to the cluster #21, the remote copy processing execution unit 133 turns off the signal in the area indicative of the copy data in the differential bit map. Then, the CHA 13a of the cluster #11 stores the data from the cache memory 16a of the cluster #11 into the disk corresponding to the logical volume A by a write-after manner. Further, the CHA 13a of the cluster #11 updates the order management table and deletes the read data from the order management table after reading out the copy data from the cache memory 16a (step 15007). When the next copy data exists, the processing proceeds to step 15005 and when it does not exist, the processing is ended (step 15008).

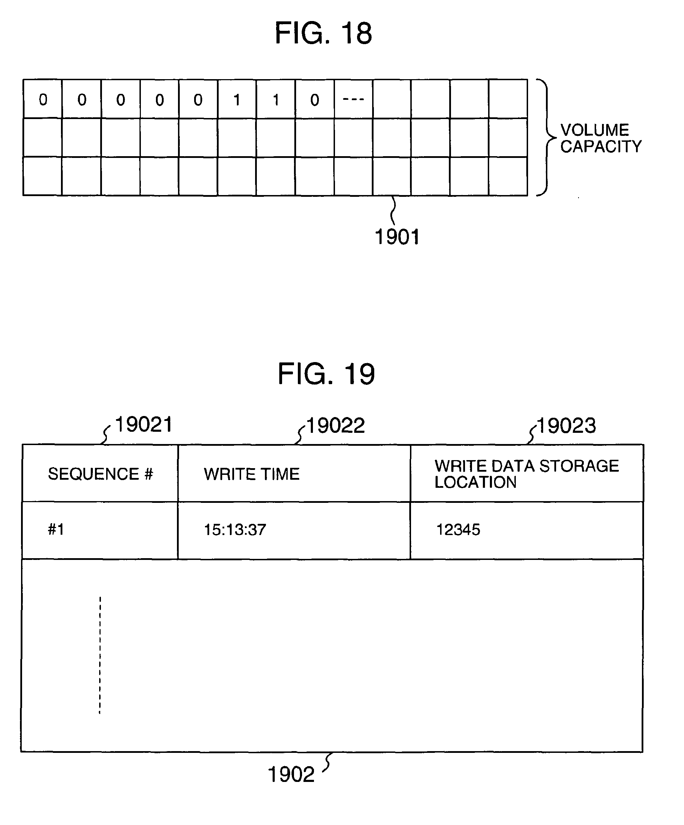

Fig. 18 shows an example of the differential bit map 1901 and Fig. 19 shows an example of the order management table 1902. As described above, the differential bit map and the order management table are stored in the common memory 17.

The differential bit map 1901 is a table for managing on the basis of a value of the bit corresponding to each data whether the consistency is taken between the original volume and the duplicate volume with regard to the data. The value of bit having "0" indicates that the same value is stored in the original volume and the duplicate volume for the data corresponding to the bit. The value of bit having "1" indicates that the data corresponding to the bit and stored in the original volume is updated and different values are stored in the original volume and the duplicate volume for the data. The cluster-constituted storage apparatus system 1 includes the differential bit map for each remote copy pair.

The sequence number 19021 indicating the order that the data is written in the original-side cluster-constituted storage apparatus system, the time 19022 that the data is written by the server computer (i.e. the time that the data is updated) and the write data storage location information 19023 indicating a location in the cache memory in which the data (write data) is stored are registered for each data in the order management table 1902. The cluster-constituted storage apparatus system 1 includes the order management table 1902 for each remote copy pair.

The original-side cluster-constituted storage apparatus system (system #1), when receiving the write data from the server computer 3, registers in the order management table 1092 the sequence number given to the write data, the write time indicating the time that the write data is received from the server computer and the location information in the cache memory in which the write data is stored when the write data is received from the server computer 3. When the data is transmitted to the duplicate-side cluster-constituted storage apparatus system in order to copy the data in the duplicate volume, the original-side cluster-constituted storage apparatus system (system #1) deletes the registration for the data from the order management table 1902.

The duplicate-side cluster-constituted storage apparatus system (system #2), when receiving the write data from the original-side cluster-constituted storage apparatus system (system #1), registers the sequence number and the write time that constitute a set together with the write data into the order management table 1092. The CHA of the duplicate-side cluster-constituted storage apparatus system controls so that the write data having consecutive sequence numbers are written in the disk in response to registration of the write data having the consecutive sequence numbers in the order management table 1092. When the sequence numbers are not consecutive and some numbers are missing, the duplicate-side cluster-constituted storage apparatus system (system #2) controls so that the write data is written after waiting until the write data given the missing sequence number arrives from the original-side cluster-constituted storage apparatus system and the sequence numbers are consecutive.

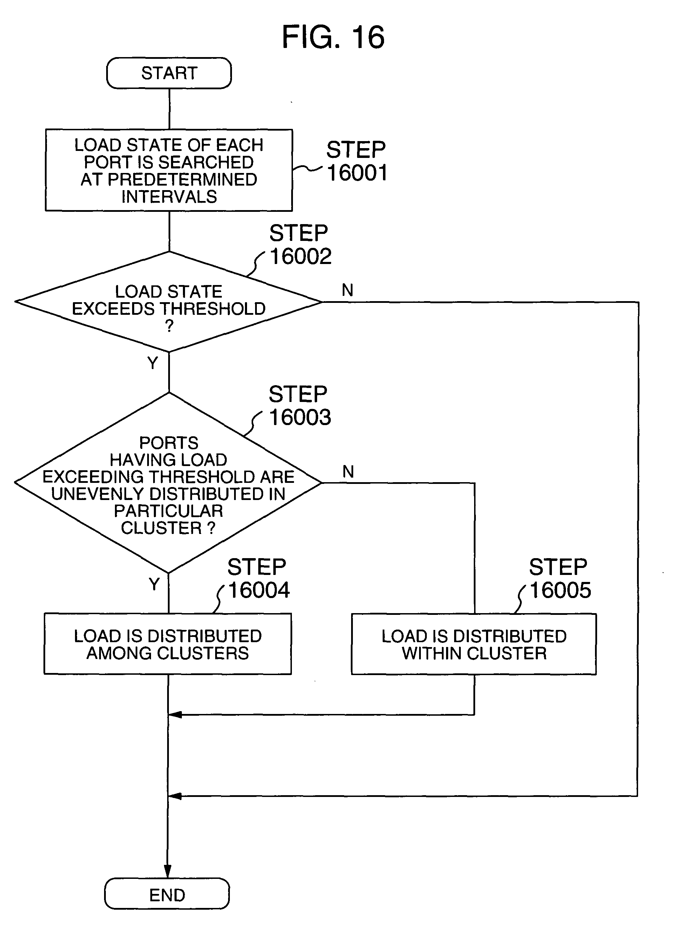

Referring now to the flow chart of Fig. 16, there is described the method of selecting a port when the remote copy port is dynamically changed after starting of the remote copy processing.

The controller 10 on the original side searches the load states of the ports at predetermined intervals (step 16001). Whether there is a port having the load exceeding the threshold or not is judged. Further, the load state searched in step 16001 may be notified to the user input/output apparatus 4, which indicates it to the user and the user may judge whether there is a port having the load exceeding the threshold to input the judged result from the user input/output apparatus 4.

The controller 10 on the original side continues the processing when there is a port having the load exceeding the threshold (step 16002). When the ports having the load exceeding the threshold are unevenly distributed in a particular cluster, the process proceeds to step 16005. Otherwise, the processing proceeds to step 16004 (step 16003). When the ports having the load exceeding the threshold are unevenly distributed in the particular cluster, the controller 10 on the original side distributes the loads among the clusters (step 16005). Otherwise the controller 10 on the original side distributes the loads among the remote copy ports within the same cluster (16004). The case where the ports having the load exceeding the threshold are unevenly distributed means that, for example, the loads on a plurality of ports in a particular cluster of the cluster-constituted storage apparatus system exceeds the threshold but there is no port having the load exceeding the threshold in other clusters of the same cluster-constituted storage apparatus system.

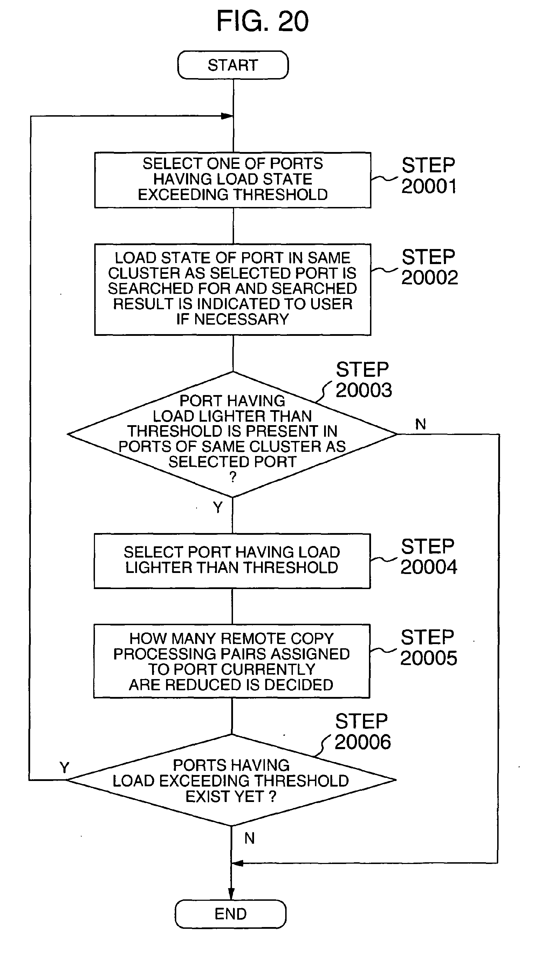

Referring now to the flow chart of Fig. 20, the processing for distributing the loads among a plurality of ports belonging to the same cluster (intra-cluster load distribution processing) and executed in step 16004 of Fig. 16 is described.

The controller 10 on the original side selects one of remote copy ports having the loads exceeding the threshold (step 20001). In this case, when there are a plurality of remote copy ports having the loads exceeding the threshold, the controller selects one having heaviest load. Next, the controller 10 on the original side searches for the load states of the remote copy ports in the same cluster as the selected remote copy port to be acquired. If necessary, the searched result is outputted to the user input/output apparatus to indicate it to the user (step 20002). When there is a remote copy port having the load lighter than the threshold in the remote copy ports belonging to the same cluster as the selected remote copy port, the processing proceeds to step 2004 and when there is no remote copy port, the processing is ended (step 2003). The controller 10 on the original side selects the remote copy port having the load state lighter than the threshold from the remote copy ports of the same cluster as the selected remote copy port (step 2004).

Next, the controller 10 on original side decides which remote copy processing request is assigned to the remote copy port selected in step 20004 from the remote copy processing requests assigned to the remote copy ports having the load exceeding the threshold and selected in step 20001, that is, the controller decides how much the remote copy processing is entrusted to the remote copy port selected in step 20004. At this time, there is considered the load state of the remote copy port having the load heavier next to the remote copy port selected in step 20001 and existing within the same cluster as the remote copy port selected step 20001. This reason is that there is the possibility that the remote copy processing assigned to the remote copy port having the load heavier next is reassigned to another remote copy port hereafter. Further, the remote copy requests to be reassigned are decided so that the number of remote copy pairs assigned to the remote copy ports selected in steps 20001 and 20004 is balanced after reassignment of the remote copy requests, that is, the remote copy requests to be reassigned are decided so that the load imposed on the remote copy ports can be distributed. Further, the user may designate the remote copy pairs or the number of remote copy pairs to be reassigned to the ports selected in step 20004 on the basis of the load state indicated to the user in step 20002 to be inputted to the user input/output apparatus 4 and the remote copy pairs designated by the user or the remote copy pairs equal in number designated by the user may be reassigned to the remote copy port selected in step 20004 (step 20005).

When the ports having the loads exceeding the threshold still exist in the cluster, the processing is continued from step 20001 again (step 20006).

Further, in the procedure shown in Fig.20, the remote copy requests are reassigned to the remote copy ports having the loads exceeding the threshold one by one in order, although all of the remote copy ports having the loads exceeding the threshold and existing in the same cluster may be selected in step 20001 and it may be decided in step 20005 how the copy requests are reassigned to all the remote copy ports selected in step 20001.

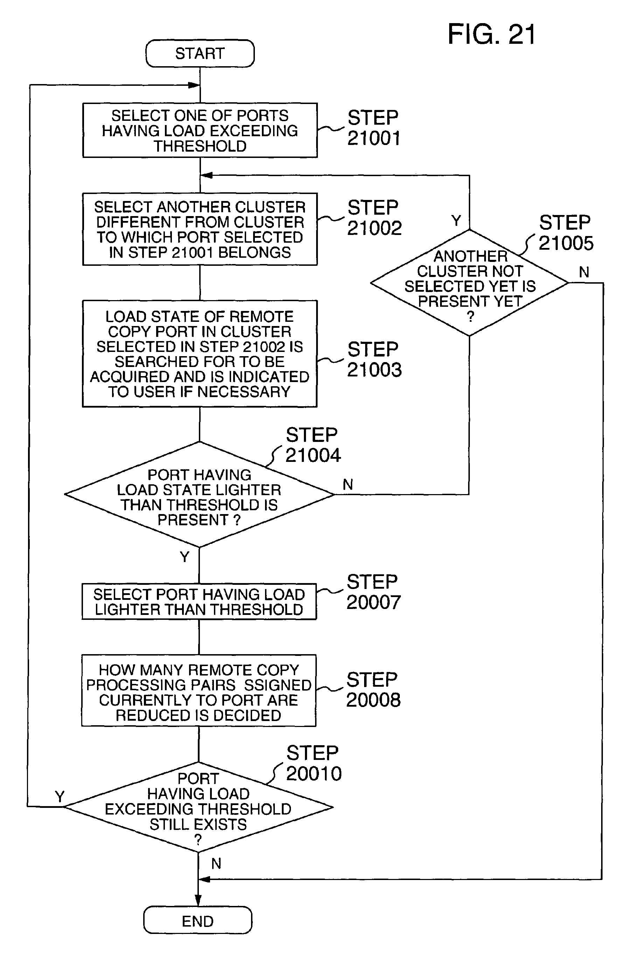

Referring now to the flow chart of Fig. 21, the inter-cluster load distribution processing executed in step 16005 of Fig. 16 for distributing the loads on the remote copy ports among the plurality of clusters is described.

The controller 10 on the original side selects one of the remote copy ports having the load states exceeding the threshold (step 21001). The controller 10 selects one cluster different from the cluster to which the remote copy port selected in step 21001 belongs (step 21002). The controller 10 searches for the load state in the remote copy port of the cluster selected in step 21002 to be acquired and outputs the acquired result to the user input/output apparatus 4 to be indicated to the user if necessary (step 21003). When there are remote copy ports having the loads lighter than the threshold in the cluster selected in step 210002, the processing proceeds to step 21007 and when there is no remote copy port, the processing proceeds to step 21005 (step 21004). In step 21005, it is judged whether the cluster different from the cluster to which the remote copy port selected in step 21001 belongs and not selected yet exists or not and when it exists, the processing proceeds to step 21002 (step 21005). When it does not exist, the processing is ended and the load distribution processing within the same cluster is performed in accordance with the procedure shown in Fig. 20.

When there are remote copy ports having the loads lighter than the threshold in step 21004, the controller 10 on the original side selects one of the remote copy ports having the loads lighter than the threshold (step 21007). In this case, for example, the remote copy port having the lightest load may be selected. It is decided which request or how many requests of the remote copy processing requests assigned to the remote copy port selected in step 21001 are reassigned to the remote copy port selected in step 21007 in accordance with the load states of the remote copy port selected in step 21001 and the remote copy port selected in step 21007. That is, it is decided how many remote copy processing pairs can be reduced from the remote copy processing pairs assigned currently to the remote copy port selected in step 21001 (step 21008). This decision processing is executed in the same procedure as in step 20005 of Fig. 20.

When another remote copy port having the load exceeding the threshold exists, the processing is returned to step 21001 and continued. When another remote copy port having the load exceeding the threshold does not exist, the processing is ended (step 21010).

In the method of selecting the remote copy port after the change of the remote copy port described with reference to Figs. 20 and 21 is made, there has been described the procedure aimed at the load distribution in the cluster-constituted storage apparatus system on the original side by way of example, although the load distribution processing of the remote copy ports can be also executed by the same procedure even in the cluster-constituted storage apparatus system on the duplicate side. Further, the user can monitor the loads supplied to the user input/output apparatus 4, of the remote copy ports of both the cluster-constituted storage apparatus systems on the original and duplicate-sides and can change the used remote copy ports so as to distribute the loads of the remote copy ports in the both the cluster-constituted storage apparatus systems.

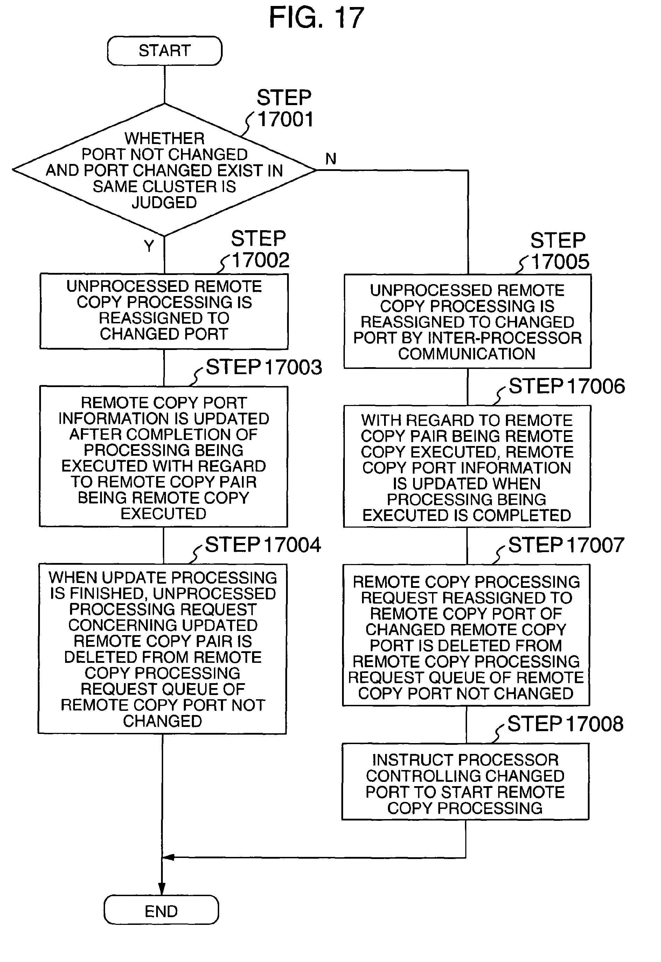

Referring now to the flow chart of Fig. 17, the method of causing the remote copy port selected by the procedure shown in Fig. 20 or 21 to actually execute the remote copy processing is described.

The controller 10 of the original side judges whether the remote copy port not changed and the remote copy port changed exist within the same cluster or not (step 17001). When both the ports exist within the same cluster, unprocessed remote copy processing selected in step 20005 of Fig. 20 or in step 21008 of Fig. 21, of the remote copy processing assigned to the port not changed is transferred or reassigned to the port changed. Concretely, delivery of the remote copy processing requests is performed between the processor (CHA) for controlling the remote copy port not changed and the processor (CHA) for controlling the remote copy port changed (step 17002). The delivery of the remote copy processing is performed between the processors by transferring the unprocessed remote copy processing stored in the remote copy processing request queue 1101 corresponding to the remote copy port not changed to the remote copy processing request queue 1101 corresponding to the remote copy port changed.

Next, reassignment of the remote copy processing about the remote copy pair for which the remote copy processing is being executed by means of the remote copy port not changed is executed. When the remote copy processing is being executed by means of the remote copy port not changed, the remote copy processing is executed by means of the remote copy port not changed until the processing being executed is completed. The delivery of the remote copy processing is performed after the completion of the processing being executed. Concretely, pair information or information of the port number assigned to the pair for which the remote copy processing is being executed is updated (step 17003).

When the update processing of information is finished, the unprocessed request concerning the remote copy pair corresponding to the updated information is deleted from the remote copy processing request queue 1101 of the remote copy port not changed (step 17004).

When it is judged in step 17001 that the remote copy port not changed and the remote copy port changed exist in different clusters, transfer of the remote copy processing is made between the processors (CHA) straddling the clusters. The unprocessed remote copy processing request selected in step 20005 of Fig. 20 and in step 21008 of Fig. 21 as that transferred to the remote copy port changed of the processing assigned to the remote copy port not changed is copied to the remote copy processing request queue 1101 of the processor controlling the port changed. The copy operation is executed by inter-processor communication or message communication or inter-job communication (step 17005).

With regard to the remote copy pair in which the remote copy port not changed is being executed, the remote copy processing is executed in the port not changed until the processing being executed is completed. When the processing being executed is completed, the pair information being assigned to the remote copy port or the information of the port number assigned to the pair is updated and the copy is made in the same manner as step 17004. Further, the remote copy pair information, the differential bit map and the order management table are copied from the common memory in the cluster to which the remote copy port not changed belongs into the common memory in the cluster to which the changed remote copy port belongs ( step 17006).

Thereafter, the remote copy request reassigned to the changed remote copy port is deleted from the remote copy processing request queue 1101 of the processor controlling the remote copy port not changed (step 17007). The processor (CHA) controlling the remote copy port not changed instructs the processor (CHA) controlling the changed remote copy port to execute the remote copy processing to thereby start the remote copy processing (step 17008).

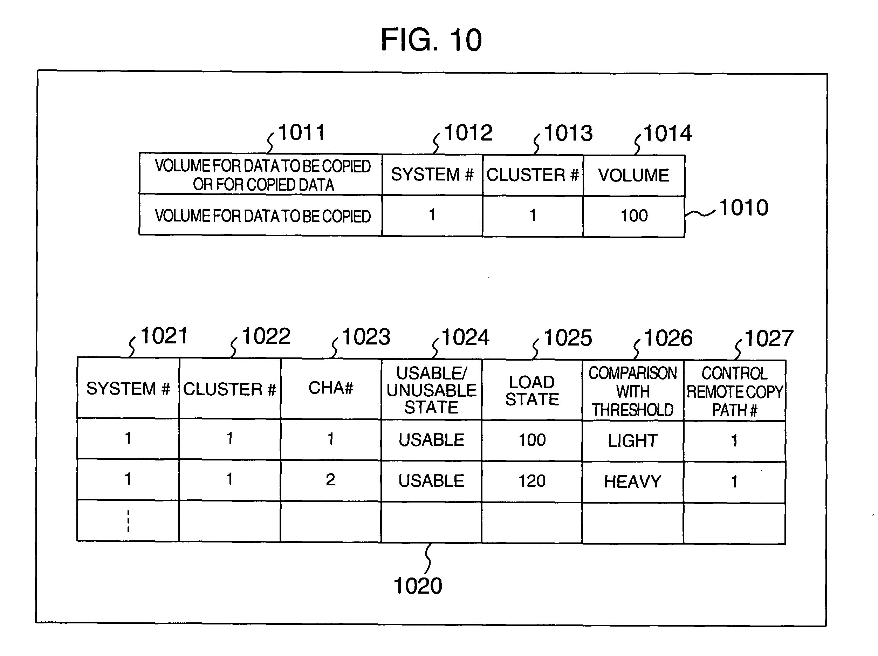

An example of information indicating the load state of the remote copy port indicated to the user input/output apparatus 4 in step 20002 of Fig. 20 and step 21003 of Fig. 2 is shown in Fig. 10.

An input picture 1010 shows an example of information inputted by the user in order to display the load state of the remote copy port onto the user input/output apparatus 4. The user inputs information for designating a volume to the user input/output apparatus 4. The inputted information contains, concretely, information 1011 indicating whether the volume is that for data to be copied or that for copied data, the number 1012 of the cluster-constituted storage apparatus system to which the volume belongs, the number 1013 of the cluster to which the volume belongs and the number 1014 of the volume.

When these information is received as the input data 1010, the data acquisition unit 191 of the user input/output apparatus 4 displays a list of remote copy ports having the possibility that the remote copy processing concerning the volume indicated by the input data is performed.

The information concerning the remote copy ports outputted by the user input/output apparatus 4 is a list of remote copy ports belonging to the same cluster-constituted storage apparatus system as the volume indicated by the input information and an example thereof is output information 1020. The list of remote copy ports includes the number 1021 of the cluster-constituted storage apparatus system to which the port belongs, the number 1022 of the cluster to which the port belongs, the number 1023 of the CHA connected to the port, the usable/unusable state 1024 of the port, the numerical value 1025 indicating the load state of the port, the heaviness/lightness 1026 of the load on the port in case where the load on the port is compared with a predetermined threshold and the number 1027 of remote copy path.

The user input/output apparatus 4 can output all candidates of remote copy ports which can execute the remote copy processing and select ports having still lighter load from the candidates of remote copy ports to be outputted. Further, the user input/output apparatus 4 may select one port which is to be a changed remote copy port from the candidates of remote copy ports and output only information concerning the selected remote copy port.

<Second Embodiment>

A second embodiment of the present invention is now described.

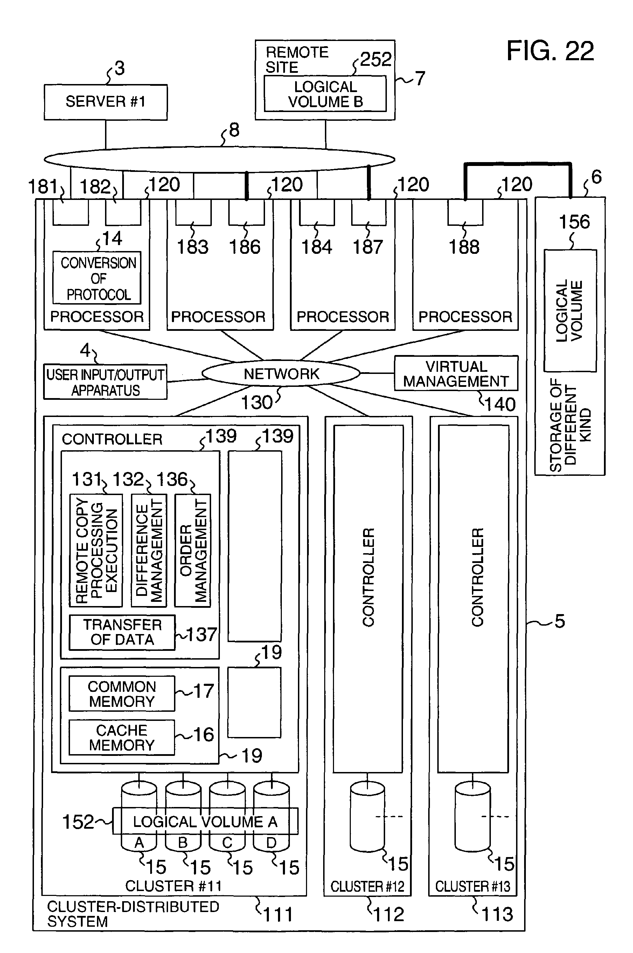

Fig. 22 is a block diagram illustrating an example of a computer system in the second embodiment. The computer system includes a cluster-distributed storage apparatus system 5, a server 3 which uses data stored in the cluster-distributed storage apparatus system 5 and a remote site 7 in which a storage apparatus system having volumes for remote copied data exists, which are connected to one another by means of a network 8.

The relation of the cluster-distributed system 5 and the remote site 7 is the same as that of the cluster-constituted storage apparatus system (system #1) 110 and the cluster-constituted storage apparatus system (system #2) 210 of Fig. 12.

The cluster-distributed system 5 includes a plurality (3 systems are displayed in Fig. 22 as an example) of clusters 111 to 113, a plurality of processors 120 for receiving requests from the server 3, an internal network 130 for connecting the plurality of processors 120 and the plurality of clusters 111 to 113 and a virtual management unit 140 for making control management of the processors and connected to the internal network 130. The plurality of processors 120, the server 3 and the remote site 7 are connected through the network 8.

The processors 120 receive even accesses to any logical volumes provided under the clusters 111 to 113 as far as the logical volumes are those in the cluster-distributed system 5. Accordingly, access to any logical volume in the cluster-distributed system 5 can be made even from any ports 181 to 184.

In this configuration, the channel connection unit which is heretofore connected to the network 8 and controls transmission and reception of information between the network and the storage apparatus system is made independent of other portions as the processor 120 and the processor 120 converts the protocol of the request received from the server 3 into the format recognizable by a cluster and judges a cluster to which the logical volume to which the request is issued belongs to thereby transmits the converted request to the cluster.

The cluster 111 includes a controller and one or a plurality of disk drives 15 connected to the controller. The controller includes a plurality of processor 139 and a plurality of memory units 19. Other clusters 112 and 113 are configured in the same manner.

The processors 139 are mounted or provided in the controller and the plurality of processors 139 execute processing in parallel. The program for executing analysis of the command inputted to the cluster through the ports 181 to 184 from the server 3 and transfer of data between the server 3 and the cluster is stored in the common memory of the memory unit 19 and the processor executes the program stored in the common memory. Further, the processor also executes the program for making control of disk array such as generation of parity and the program for controlling transfer of data between the disk drive apparatus 15 and controller. These programs are also stored in the common memory of the memory unit 19.

The disk apparatus 15 includes a plurality of ports and is connected to different processors 139 in the same cluster by means of a plurality of paths. Accordingly, any processor 139 existing in a certain cluster can access to any disk apparatus 15 in the same cluster. Further, the program for executing the remote copy processing, the program for managing difference of data stored in the remote site and data stored in the cluster-distributed system 5, the program for managing order of transfer of data when the data is transferred from the cluster-distributed system 5 to the remote site 7 and the program for executing data transfer processing are stored in the hard disk of the controller and are read out therefrom into the common memory to be executed by the processor 139.

The memory unit 19 includes the common memory 17 and the cache memory 16 accessible from the processors 139. Each processor 139 stores information required for management of jobs, information for managing the cache memory and data to be shared by the processors into the common memory 17. The configuration of the memory unit 19, the cache memory 16 and the common memory 17 is the same as that described in the first embodiment. The pair information table shown in Fig. 2, the volume information table shown in Fig. 3, the differential bit map shown in Fig. 18 and the order management table shown in Fig. 19 are also stored in the common memory 17. Further, the common memory 17 and the cache memory 16 may be the same memory. Moreover, as another method, information shown in Figs. 2, 3, 18 and 19 can be stored in a memory (not shown) provided in the virtual management unit 140 to be managed. The memory unit 19 includes a plurality of common memories and data of the same contents is stored in each of the common memories to thereby improve the reliability.

Further, the cluster-distributed system 5 includes the user input/output apparatus 4 and the user input/output apparatus 4 is connected to the internal network 130 or the network 8. In Fig. 22, the user input/output apparatus 4 is connected to the network 130.

Port selection as to which of remote copy port 186 and remote copy port 187, for example, is used when data stored in the logical volume A 152 is remote copied to the logical volume B 252 cannot be made on the cluster side. This reason is that the processor 120 receiving the remote copy request exists independently of the cluster outside of the cluster and the remote copy port installed in any processor 120 is used to execute the remote copy processing.

Further, in the cluster-distributed system 5, only the processor group existing in the same cluster 111 as the volume A can access to the volume A which is that for data to be remote copied and accordingly in the embodiment it is impossible to freely select the processor for executing the remote copy processing from all the processors existing in the cluster-distributed system 5.

The remote copy processing in the embodiment is executed in the same manner as in step 6004 of Fig. 6. However, in the embodiment, the CHA 13 in step 6004 corresponds to the processor of the cluster 11 which has received the command.

In the cluster-constituted storage apparatus system as shown in Fig. 1, access to any disk apparatus can be made from any port, although in the cluster-distributed system shown in Fig. 22 the disk apparatus accessible from the processors is limited in each cluster and a certain processor can access to only the disk apparatus existing in the same cluster as the processor.

Accordingly, in the embodiment, when processing concentrates on a processor 139 within a particular cluster, data stored in the volume for data to be remote copied is transferred to a logical volume in another cluster in which a processor having light load exists and thereafter the remote copy processing is executed between the logical volume in the cluster and the logical volume in the remote site 7. In this manner, the loads on the processor 139 in the cluster-distributed system 5 can be distributed. Further, if the loads on the processor are deflected or not balanced in the cluster-distributed system 5 even when the remote copy processing is being executed, the data stored in the volume for data to be remote copied is dynamically transferred to distribute the loads on the processor within the cluster-distributed system 5.

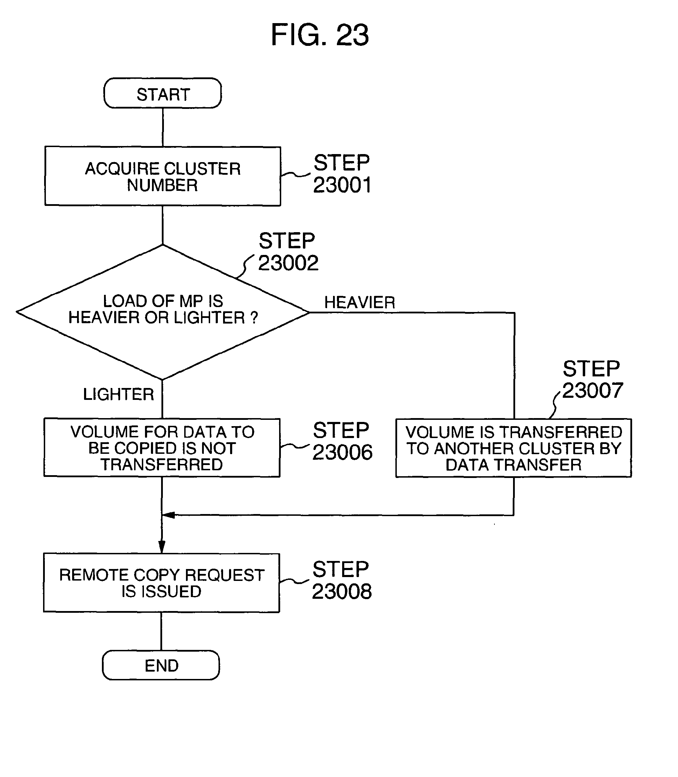

Referring now to the flow chart of Fig. 23, the processing for judging whether it is necessary to transfer the data stored in the volume for data to be remote copied or not is described. When the remote copy is started, the system manager (user) recognizes the cluster number of the volume for data to be remote copied by means of the user input/output apparatus 4 (step 23001). For example, the user input/output apparatus 4 refers to the pair information table shown in Fig. 2 and stored in the cluster-distributed system 5 in accordance with user's instruction to thereby acquire the cluster number of the volume for data to be remote copied, so that the cluster number is outputted in the output picture of the user input/output apparatus.

Next, the processing proceeds to the processing for grasping the load states of the processors in the cluster to which the volume for data to be remote copied belongs. The load states of the processors provided in the clusters of the cluster-distributed system 5 are acquired from the clusters by the virtual management unit 140 and are managed by the virtual management unit 140.

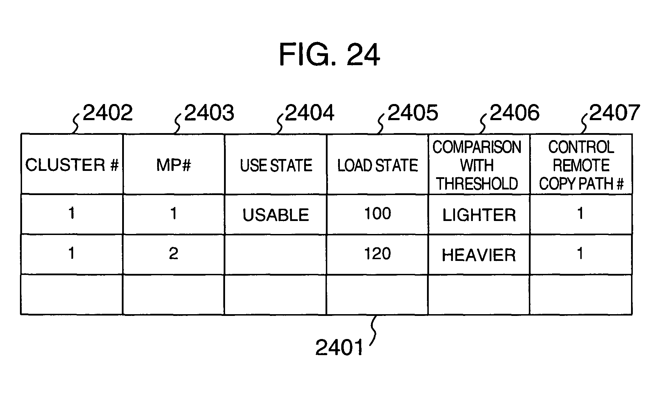

Fig. 24 shows an example of a processor load state table 2401 stored in the memory provided in the virtual management unit 140. The processor load state table 2401 registers therein cluster number 2402, processor number 2403, use state 2404 indicating whether the processor indicated by the processor number can be used or not, load state 2405 indicating the degree of the load imposed on the processor, comparison 2406 with threshold indicating a comparison result of the load imposed on the processor with a threshold and remote copy path number 2407. The virtual management unit 140 manages the load states of the processors in the cluster-distributed system by means of the processor load state table 2401.

It is judged on the basis of the load states managed by the virtual management unit 140 whether the load of the processor in the cluster to which the volume for data to be remote copied belongs is heavier than the threshold or not (step 23005). This judgment may be made by the user or may be made automatically in the cluster-distributed system 5.

When the user makes the judgment, the virtual management unit 140 transmits contents of the data registered in the processor load state table 2401 to the user input/output apparatus 4 to notify the load states of the processors in the cluster-distributed system 5 to the user input/output apparatus 4, so that the user input/output apparatus 4 outputs the received information in the output picture to indicate the load states of the processors to the user. The user refers to the load states of the processors displayed in the output picture to judge whether the processor having the load not exceeding the threshold exists in the processors of the cluster to which the volume for data to be remote copied belongs or not, so that the judged result is inputted to the user input/output apparatus 4. The judged result inputted by the user is transmitted from the user input/output apparatus 4 to the virtual management unit 140.

On the other hand, when the judgment as to which of the load and the threshold is heavier or lighter is automatically made in the cluster-distributed system 5, the threshold is previously set in the virtual management unit 140 and the virtual management unit 140 compares the value indicated by the load state 2405 in the processor load state table 2401 with the threshold to thereby make comparison as to which of the load of the processor and the threshold is heavier or lighter.

Further, instead of simple comparison of the load of the processor with the threshold, two thresholds may be set and the user or the virtual management unit may calculate a ratio of the value of the load of the processor to a first threshold and judgment as to whether the load of the processor is heavier or lighter may be made on the basis of whether the calculated result exceeds a second threshold or not.

In step 23005, when there is a processor having the load not exceeding the threshold in the cluster to which the volume for data to be remote copied belongs, the load of the processor is judged to be lighter and the remote copy processing is executed without transfer of the data stored in the source volume (step 23006).

In step 23005, when there is no processor having the load not exceeding the threshold in the cluster to which the volume for data to be remote copied belongs, the load of the processor is judged to be heavier and the controller of the cluster having the volume for data to be remote copied transfers the data stored in the volume for data to be remote copied to the logical volume belonging to another cluster by means of data transfer (step 23007). This data transfer processing is described later.

When the data transfer processing (step 23007) is completed or when it is judged that the data transfer processing is not necessary (step 23006), the server 3 issues the remote copy request to the cluster-distributed system 5 (step 23008).

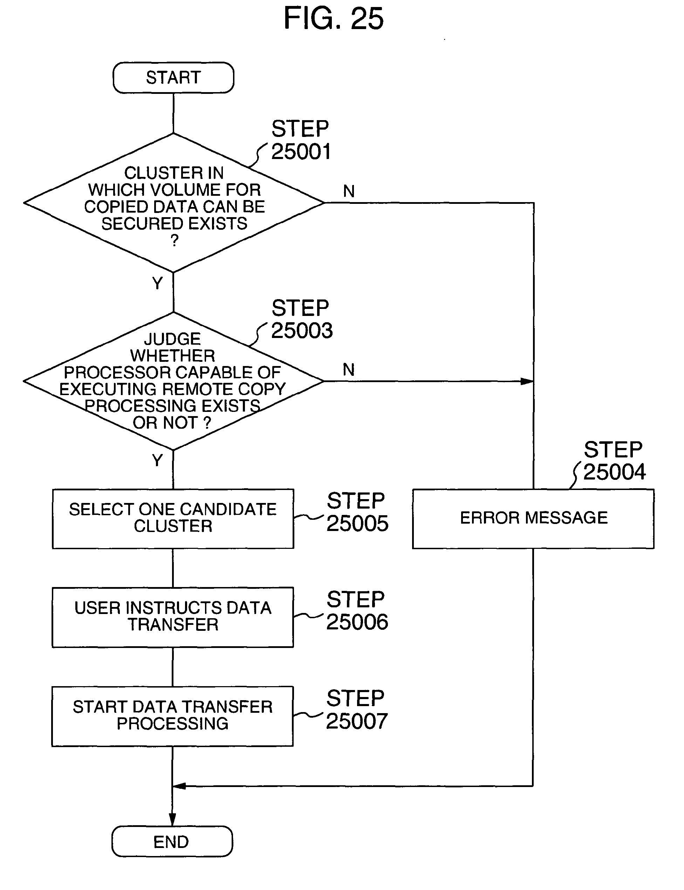

Referring now to the flow chart of Fig. 25, the procedure of the data transfer processing (step 23007) for transferring the data stored in the volume for data to be remote copied to the logical volume belonging to another cluster is described.

First, the cluster to which the data stored in the volume is to be transferred is selected. The controller of the cluster to which the volume for data to be remote copied belongs judges whether a cluster in which the target volume can be secured exists in other clusters except the cluster to which the volume for data to be remote copied belongs or not (step 25001). The controller of the cluster to which the volume for data to be remote copied belongs makes the judgment on the basis of idle volume information for the clusters stored in the memory of the virtual management unit 140.

When the logical volume to which the data is to be transferred cannot be secured, the data transfer cannot be executed. Accordingly, a message to the effect that the logical volume to which the data is to be transferred cannot be secured is transmitted to the user input/output apparatus 4 and the user input/output apparatus 4 outputs the received message to the output picture (step 25004).

When the logical volume to which the data is to be transferred can be secured in other clusters, it is judged whether the processor which can execute a new remote copy processing exists in the cluster to which the securable logical volume belongs or not (step 25003). Whether the new remote copy processing can be executed or not is judged on the basis of whether the loads of the processors exceed the threshold or not in the same manner as step 23005 of Fig. 23.

When there is no processor which can execute the new remote copy processing, a message to that effect is transmitted to the user input/output apparatus 4 and the user input/output apparatus 4 outputs the received message to the output picture (step 25004).

When the cluster including the processor having the load not exceeding the threshold and capable of executing the new remote copy processing exists in the cluster to which the securable logical volume belongs, such a cluster becomes a candidate to which the data is to be transferred. When there are a plurality of candidate clusters, one of them is selected (step 25005). In step 25005, the cluster including the processor having the lightest load may be selected or the loads of the plurality of processors existing in the cluster may be averaged and the cluster having the lowest averaged value may be selected.

When the cluster to which the data is to be transferred is selected, the user inputs a data transfer command to the user input/output apparatus 4 so that the data stored in the volume for data to be remote copied is transferred to the logical volume securable in the selected cluster (step 25006).

The data transfer command is transmitted from the user input/output apparatus 4 to the controller of the cluster to which the volume for data to be remote copied belongs and the data transfer processing is executed between the clusters by control of a data transfer unit 137 included in the processor in the controller and a data transfer unit 138 included in the processor in the cluster to which the data is to be transferred (step 25007). The data transfer processing is executed by the method described in, for example, U.S. Patent No. 6,108,748.

After the remote copy processing is started, the load states of the processors existing in the cluster is examined for each cluster at predetermined intervals to investigate whether a processor having the load exceeding the threshold exists or not. The examination of the load states of the processors may be made by another processor existing in the same cluster as the processor to be examined or may be made by the virtual management unit 140. When the virtual management unit 140 is made the examination, the virtual management unit 140 can manage the load states of all the processors existing in the clusters. Accordingly, when there is a processor having the heavy load, it is easy to select the cluster to which the data stored in the volume for data to be remote copied is to be transferred. Further, as a result of the examination, when it is ascertained that there is the processor having the heavy load, the data stored in the volume for data to be remote copied can be transferred to the volume of another cluster dynamically even when the remote copy processing is being executed.

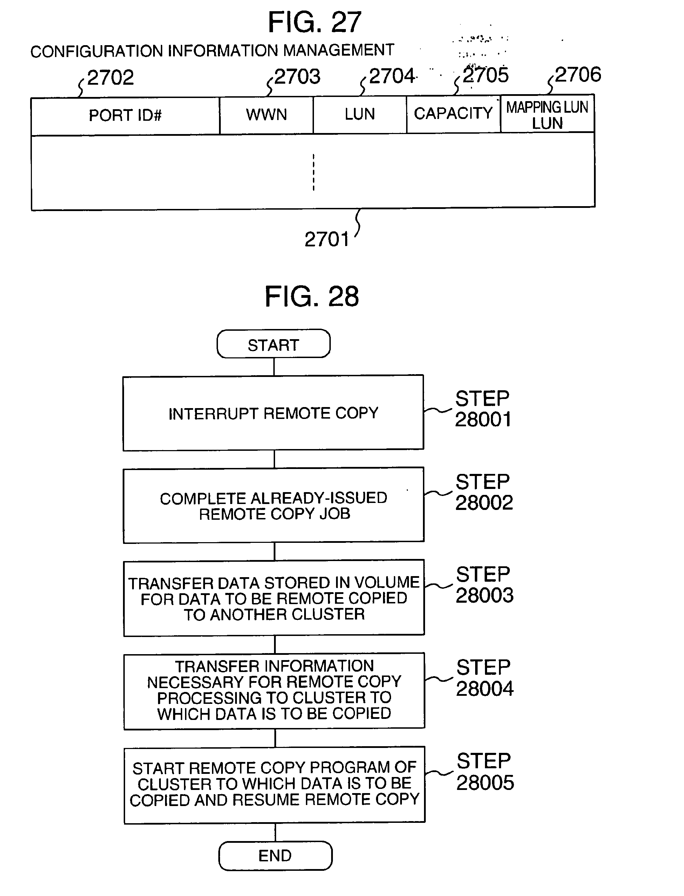

Referring now to the flow chart of Fig. 28, the method of transferring the volume for data to be remote copied to another cluster dynamically during execution of the remote copy processing of the data from the volume for data to be remote copied in the cluster-distributed system 5 to the logical volume in the remote site 7 in the computer system of Fig. 22 is described. The processing described here is performed after it is discovered that the load of a certain processor exceeds the threshold as the result that the loads of the processors in the cluster-distributed system are periodically monitored and it is judged that the data stored in the volume for data to be remote copied is to be transferred to the volume in another cluster.

When there is a processor having the load exceeding the threshold in the processors of the cluster-distributed system, the virtual management unit which is examining the load states of the processors periodically or the user issues a transfer request for instructing to transfer the data stored in the volume for data to be remote copied to the volume in another cluster. Further, the case where the transfer request is issued from the user means the case where the user inputs the transfer request in the user input/output apparatus 4. The transfer request is transmitted from the virtual management unit or the user input/output apparatus 4 to the processor in the cluster to which the volume for data to be remote copied belongs and the processor which has received the request interrupts the remote copy processing (step 28001).

When the remote copy processing is interrupted, a new remote copy job is not prepared. However, it is necessary to control so that the same data as the data stored in the volume for data to be remote copied in the cluster-distributed system at the time that the remote copy processing is interrupted is stored in the volume for remote copied data in the remote site as viewed from the remote site 7 to which data is to be copied. Accordingly, the processor in the cluster to which the volume for data to be remote copied belongs and the controller which controls the volume for remote copied data in the remote site complete the remote copy processing for the remote copy job already issued in the cluster-distributed system 5 upon interruption of the remote copy processing and accumulated in the queue (step 28002). Consequently, the remote copy processing can be interrupted in the state that the original site (cluster-distributed system 5) and the duplicate site (remote site) are synchronized with each other.

Next, the data stored in the volume for data to be remote copied is transferred to the logical volume in another cluster except the cluster to which the volume for data to be remote copied belongs by the data transfer processing (step 28003). Further, when the processor 120 of the cluster-distributed system receives a write request to the volume for data to be remote copied issued from the server 3, the data is recorded in the memory 19 of the cluster to which the data is to be copied. After completion of transfer of the data to the cluster to which the data is to be copied, the controller of the cluster to which the data is to be transferred overwrites the recorded write data (step 28004).

Further, the data concerning the original volume in the pair information table shown in Fig. 2 and the volume information table shown in Fig. 3 is transmitted from the cluster from which data is to be transferred to the cluster to which data is to be transferred to be registered (stored) in the common memory of the cluster to which data is to be transferred while the volume of the cluster to which data is to be transferred is corrected to be the original volume. The pair information table and the volume information table stored in the common memory of the cluster from which data is to be transferred are deleted (step 28004).

Further, when the data stored in the volume for data to be remote copied is transferred to another logical volume in the cluster-distributed system 5, the volume for data to be remote copied is changed for the remote site and it is also necessary to correct the volume pair information managed on the remote site side. Accordingly, in order to conceal the change of the volume for data to be remote copied to the remote site side, the mapping of the logical volumes is changed and the identification of the logical volume of the cluster from which data is to be transferred is used as the identification of the logical volume of the cluster to which data is to be transferred. Thus, the volume pair information stored in the remote site is not required to be corrected.

In step 28004, when the control data necessary for resumption of the remote copy processing has been transmitted from the cluster from which data is to be transferred to the cluster to which data is to be transferred, the remote copy is resumed between the volume of the cluster to which data is to be transferred and the logical volume in the remote site. Concretely, the remote copy program stored in the common memory of the cluster to which data is to be transferred is started in response to the completion of transmission of the control data (step 28005). The remote copy processing is resumed from the state that the consistency is taken between the controller in the cluster to which data is to be transferred and the remote site, that is, between the original side and the duplicate side in step 28002.

Further, in the cluster-distributed system shown in Fig. 22, another storage system 6 is connected to the cluster-distributed system 5 through the processor 120. The storage system 6 may be a storage system having the same configuration as the cluster-distributed system 5 or may be a storage system having the configuration different from the cluster-distributed system 5.

The storage system 6 is connected through the communication path to any one of the plurality of processors 120 in the cluster-distributed system 5. When the cluster-distributed system 5 judges that the data input/output request received from the server 3 is not an input/output request for the data stored in the disk apparatus of the cluster-distributed system 5, the cluster-distributed system 5 converts the data input/output request into a second data input/output request for the data stored in the storage system 6 and transmits the second data input/output request to the storage system 6 through the communication path. The storage system 6 receives the second data input/output request from the cluster-distributed system 5 and executes input/output processing of the data designated in the second data input/output request.

The cluster-distributed system 5 provides the server 3 with the logical volume which is the memory area included in the storage system 6 as the logical volume of the cluster-distributed system 5. Accordingly, the cluster-distributed system 5 includes, as information concerning the logical volume treated by the cluster-distributed system itself, a configuration information management table (Fig. 27) indicating whether the logical volume corresponds to the memory area included in the cluster-distributed system 5 or the memory area included in the storage system 6 connected to the cluster-distributed system 5. When the logical volume corresponds to that included in another storage system, an identifier of a port used to access to the logical volume and an identifier assigned to the logical volume in the storage system 6 are described in the configuration information management table.

Fig. 27 shows an example of the configuration information management table included in the cluster-distributed system 5. The configuration information management table is stored in the memory of the virtual management unit 14. Alternatively, the configuration information management table may be stored in the memory of the processor 120. Information concerning the logical volume treated by the cluster-distributed system 5 is described in the configuration information management table 2701. Not only information of the logical volume 152 existing in the cluster-distributed system 5 and to be subjected to the data input/output processing of the cluster-distributed system 5 but also information of the logical volume 156 subjected to the data input/output processing by the storage system 6 connected to the cluster-distributed system 5 and existing in the storage system 6 are described in the configuration information management table 2701 (however, Fig. 27 shows only information of the logical volume 152).

In Fig. 27, port ID numbers of external interfaces connected to the logical volume are described in port ID number 2702. WWNs corresponding to port ID are described in WWN 2703. LUNs of logical volumes are described in LUN 2704. Capacities of memory areas provided by the logical volumes 152 are described in capacity 2705.

Ports and identifiers of the logical volume 156 of other storage system 6 corresponding to the LUN are described in mapping LUN 2706. That is, when there is any description in the mapping LUN 2705, the logical volume is the logical volume 156 existing in other storage system 6 connected to the cluster-distributed system 5 and when there is no registration in the mapping LUN 2705, the logical volume is the logical volume 152 existing in the cluster-distributed system 5.

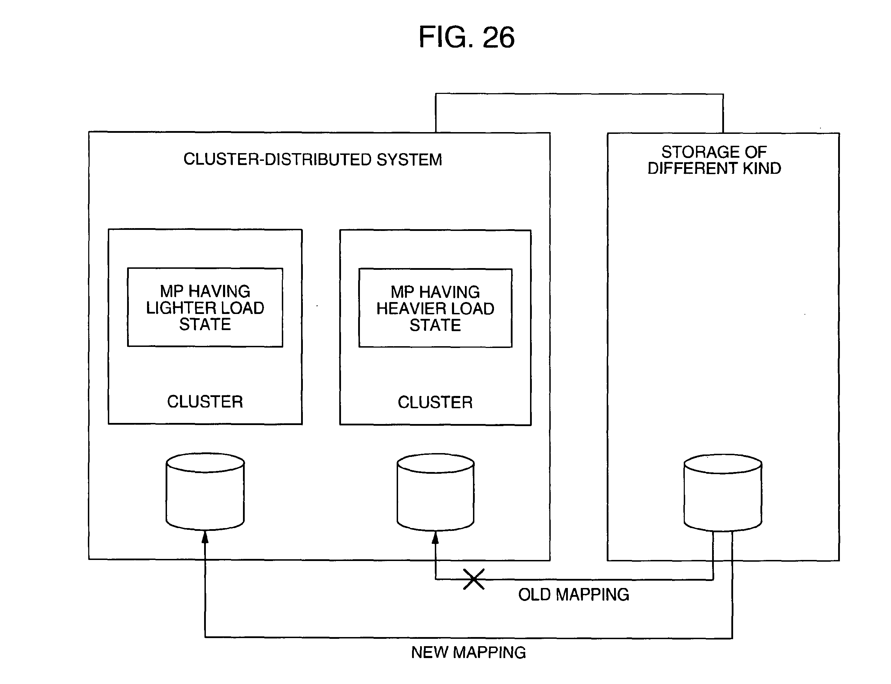

When the volume for data to be remote copied exists in other storage system 6, the cluster-distributed system 5 re-maps the LUN 2704 corresponding to the volume for data to be remote copied to the LUN of the logical volume managed by the processor existing another cluster to thereby change the cluster which executes the remote copy processing. That is, the cluster-distributed system 5 changes the mapping LUN 2704 of the information concerning the volume for data to be remote copied registered in the configuration information management table 2701 to identification of the logical volume managed in another cluster to thereby change the cluster which executes the remote copy processing. The reason is that, when the volume for data to be remote copied exists in other storage system 6, the remote copy processing is executed by the cluster corresponding to the LUN 2704 corresponding to the volume for data to be remote copied. Accordingly, in such case, only by changing the LUN corresponding to the volume for data to be remote copied, the same effect that data is transferred between clusters is obtained (Fig. 26) without transfer of real data stored in the volume for data to be remote copied in the storage system 6.

According to the embodiments 1 and 2, the loads due to the remote copy processing can be dispersed in the cluster-constituted storage apparatus system or the cluster-distributed storage apparatus system.

Further, since the port used for the remote copy processing can be changed even during the remote copy processing, the load can be dispersed in the plurality of remote copy ports or the plurality of clusters even during the remote copy processing.

Moreover, when the port dedicated to the remote copy is used to execute the remote copy processing, the remote copy port existing in another cluster different from the cluster in which the data to be remote copied is stored can be used for the remote copy processing and accordingly the data stored in the cluster in which the remote copy port cannot be provided can be also to be remote copied. Further, in the cluster-constituted storage apparatus system and the cluster-distributed storage apparatus system, the remote copy ports can be shared among the clusters, so that the number of remote copy ports to be installed can be suppressed and the remote copy ports can be utilized effectively.

According to the present invention, the loads due to the remote copy processing can be dispersed in the storage system.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A storage apparatus system comprising:

   a plurality of storage apparatus subsystems each including a plurality of disk apparatuses, a controller for connecting said plurality of disk apparatuses and a plurality of ports connected to a network; and
   an inter-storage-apparatus-subsystem connection unit for connecting said plurality of storage apparatus subsystems to each other;
   any of said controllers acquiring load information indicative of a load state in each of said plurality of ports; wherein
   data stored in any of said plurality of disk apparatuses is copied to another storage apparatus system connected to said network through said network by means of a port decided on the basis of said load information.

2. A storage apparatus system according to Claim 1, wherein
   said port decided on the basis of said load information is a port having a lightest load of said plurality of ports included in said storage apparatus system and used to transmit data to another storage apparatus system connected through said network.

3. A storage apparatus system according to Claim 1, wherein
   said port decided on the basis of said load information is a port existing in said storage apparatus subsystem to which the disk in which data to be copied to said another storage apparatus system is stored belongs.

4. A storage apparatus system according to Claim 1, wherein
   said any of said controllers selects a port used for copy processing of data to said another storage apparatus system on the basis of said load information.

5. A storage apparatus system according to Claim 1, wherein
   said any of said controllers transmits said acquired load information to a management computer connected to said network; and
   a port designated by said management computer on the basis of said load information is used to copy data stored in any of said plurality of disk apparatuses to said another storage apparatus system.

6. A storage apparatus system according to Claim 5, wherein
   said controller transmits the load information outputted to an output picture included in said management computer to said management computer; and
   a port designated by information inputted to said management computer from a manager on the basis of said load information outputted to said output picture is used to copy data stored in any of said plurality of disk apparatuses to said another storage apparatus system.

7. A storage apparatus system according to Claim 1, wherein
   said controller changes a port used to copy data stored in any of said plurality of disk apparatuses to said another storage apparatus system.

8. A storage apparatus system comprising:

   a plurality of storage apparatus subsystems each including a plurality of disk apparatuses and a controller for controlling input/output requests to said plurality of disk apparatuses;
   a plurality of processors connected to a network;
   a management unit for managing said plurality of storage apparatus subsystems; and
   an internal network for connecting said plurality of storage apparatus subsystems, said plurality of processors and said management unit to each other;
   said management unit managing load states of said plurality of controllers;
   data stored in a first disk apparatus included in a first storage apparatus subsystem, when a second controller included in a second storage apparatus subsystem is designated on the basis of the load state as a controller used to copy said data stored in said first disk apparatus to another storage apparatus connected to said network, being transferred to a second disk apparatus included in said second storage apparatus subsystem and said second controller controlling to copy said data transferred to said second disk apparatus to said another storage apparatus.

9. A storage apparatus system according to Claim 8, wherein
said controller included in each of said storage apparatus subsystems includes a plurality of processors; and
when a processor having a load lighter than a predetermined threshold does not exist in a plurality of processors included in a first controller included in said first storage apparatus subsystem, said second controller is designated as a controller used to copy said data stored in said first disk apparatus to said another storage apparatus.

10. A storage apparatus system according to Claim 9, wherein
said management unit designates said second controller as a controller used to copy said data stored in said first disk apparatus to said another storage apparatus.

11. A storage apparatus system according to Claim 9, wherein
said management unit manages the load state in each of said plurality of processors included in each of said plurality of controllers.

12. A storage apparatus system according to Claim 8, wherein
said management unit acquires information indicative of the load state of each of said plurality of controllers at predetermined intervals and designates, when it is judged on the basis of said acquired information that a load of said second controller is heavier than a predetermined threshold, a third controller included in a third storage apparatus subsystem as a controller used to copy data stored in said second disk apparatus to said another storage apparatus.

13. A data replication method of copying data stored in a first storage apparatus system to a second storage apparatus system connected to said first storage apparatus system through a network, wherein
said first storage apparatus system comprises a plurality of storage apparatus subsystems including a plurality of disk apparatuses, a controller for controlling input/output requests to said plurality of disk apparatuses and one or a plurality of ports connected to said network, and an inter-subsystem connection apparatus for connecting between said plurality of storage apparatus subsystems, and
data stored in a first disk apparatus included in said first storage apparatus subsystem is transmitted to said second storage apparatus system through a second port included in said second storage apparatus subsystem.

14. A data replication method according to Claim 13, further comprising:

acquiring load states of one or a plurality of first ports included in said first storage apparatus subsystem; and transmitting said data stored in said first disk apparatus to said second storage apparatus system through said second port when the loads of said one or plurality of first ports are heavier than a predetermined threshold.

15. A data replication method according to Claim 14, wherein
said second storage apparatus system includes a plurality of ports connected to said network, and
a port selected on the basis of a load state of each of said plurality of ports included in said second storage apparatus system, of said plurality of ports included in said second storage apparatus system is used to receive said data stored in said first disk apparatus and transmitted from said first storage apparatus system.

# FIG. 1

SYSTEM #2

15  15  15  15

A  B  C  D

LOGICAL VOLUME

1

OPERATION UNIT

41

DISPLAY SCREEN

4

MEMORY

3

SERVER #1

3

SERVER #2

2

1

18  18

10

13  13  13  13

CHA  CHA  CHA  CHA

19

COMMON MEMORY

STORAGE LOCATION OF OTHER CLUSTER INFORMATION

VOLUME PAIR INFORMATION

RESOURCE LOAD INFORMATION

CACHE MEMORY

INTER-CLUSTER CONNECTION MECHANISM

12

16

171  172  173  17

DKA  DKA  DKA  DKA

14  14  14  14

LOGICAL VOLUME

A  B  C  D

15  15  151  15  15

CLUSTER #1

CLUSTER #2

11  11

SYSTEM #1

# FIG. 2

| PAIR # | ORIGINAL VOLUME | | | DUPLICATE VOLUME | | | PAIR STATE | COPY POINTER |
|---|---|---|---|---|---|---|---|---|
| | SYSTEM # | VOLUME # | CLUSTER # | SYSTEM # | VOLUME # | CLUSTER # | | |
| | | | | | | | | |
| #10 | | | | | | | | |
| | | | | | | | | |
| | | | | | | | | |

EP 1 486 862 A2

# FIG. 3

| VOLUME # (32) | ORIGINAL/DUPLICATE (33) | DUPLICATE VOLUME (34) (35) | | VOLUME ATTRIBUTE (36) | PAIR NUMBER (37) |
|---|---|---|---|---|---|
| | | VOLUME # | CLUSTER # | | |
| 0 | ORIGINAL | #20 | #1 | | |
| | | #158 | #1 | | |
| | | #426 | #1 | | |
| ⋮ | | | | | |
| N | | | | | |

31

# FIG. 4

| CLUSTER # (82) | HEAD ADDRESS OF PAIR INFORMATION TABLE (83) | HEAD ADDRESS OF VOLUME INFORMATION (84) |
|---|---|---|
| ⋮ | | |

81

# FIG. 5

CLUSTER

# FIG. 6

```
┌──────────┐
│  START   │
└──────────┘
     │
┌─────────────────────────────┐
│ SELECT REMOTE COPY PORT USED│      STEP
│   TO MAKE REMOTE COPY       │      6001
│ PROCESSING IN SYSTEM HAVING │
│    DATA TO BE COPIED        │
└─────────────────────────────┘
     │
┌─────────────────────────────┐
│ SELECT DUPLICATE VOLUME AND │      STEP
│  REMOTE COPY PORT USED TO   │      6002
│ MAKE REMOTE COPY PROCESSING │
│    IN DUPLICATE SYSTEM      │
└─────────────────────────────┘
     │
┌─────────────────────────────┐
│ SERVER 3 ISSUES COMMAND FOR │      STEP
│ REQUESTING TO START EXECUTION│     6003
│   OF REMOTE COPY TO         │
│ CLUSTER-CONSTITUTED STORAGE │
│   APPARATUS SYSTEM 1        │
└─────────────────────────────┘
     │
┌─────────────────────────────┐
│ CHA 13 OF CLUSTER 11 WHICH HAS│    STEP
│  RECEIVED COMMAND ANALYZES  │      6004
│ COMMAND AND PERFORMS REMOTE │
│COPY PROCESSING FOR BACKING UP│
│DATA STORED IN ORIGINAL VOLUME│
│    TO DUPLICATE VOLUME      │
└─────────────────────────────┘
     │
┌──────────┐
│   END    │
└──────────┘
```

# FIG. 7

| PORT # | CLUSTER # | HOST ADAPTER | CONNECTED APPARATUS INFORMATION | | | LOGICAL VOLUME # |
|---|---|---|---|---|---|---|
| | | | NAME | CONNECTED APPARATUS# | REMOTE COPY | |
| | | | | #1 | ○ | |
| | | | | #1 | — | |
| | | | | #1 | — | |
| ⋮ | | | | | | |
| N | | | | | | |

72 73 74 75 76

71

# FIG. 8

START

SUPPLY LOAD STATE OF PORT IN SAME CLUSTER AS VOLUME A FOR DATA TO BE COPIED TO INPUT TERMINAL 4 — STEP 8001

PORT HAVING LOAD STATE LIGHTER THAN PREVIOUSLY SET THRESHOLD IS PRESENT ? — STEP 8002

N

Y

SELECT PORT HAVING LOAD STATE LIGHTER THAN THRESHOLD — STEP 8003

SELECT ANOTHER CLUSTER — STEP 8004

ANOTHER CLUSTER IS STILL PRESENT ? — STEP 8007

Y

N

PORT HAVING LOAD STATE LIGHTER THAN PREVIOUSLY SET THRESHOLD IS PRESENT IN PORTS OF ANOTHER CLUSTER ? — STEP 8005

N

Y

SELECT PORT HAVING LOAD STATE LIGHTER THAN THRESHOLD — STEP 8006

SELECT PORT FROM PORTS OF SAME CLUSTER AS VOLUME A FOR DATA TO BE COPIED — STEP 8008

END

# FIG. 9

USER INPUT APPARATUS

INDICATION OF COPY
PROCESSING PROCESSOR

DATA
ACQUISITION

INDICATION
MANAGEMENT

DISPLAY
(GRAPHIC)

# FIG. 10

| VOLUME FOR DATA TO BE COPIED OR FOR COPIED DATA (1011) | SYSTEM # (1012) | CLUSTER # (1013) | VOLUME (1014) |
|---|---|---|---|
| VOLUME FOR DATA TO BE COPIED | 1 | 1 | 100 |

~1010

| SYSTEM # (1021) | CLUSTER # (1022) | CHA# (1023) | USABLE/ UNUSABLE STATE (1024) | LOAD STATE (1025) | COMPARISON WITH THRESHOLD (1026) | CONTROL REMOTE COPY PATH # (1027) |
|---|---|---|---|---|---|---|
| 1 | 1 | 1 | USABLE | 100 | LIGHT | 1 |
| 1 | 1 | 2 | USABLE | 120 | HEAVY | 1 |
| ⋮ | | | | | | |

1020

EP 1 486 862 A2

# FIG. 11

REMOTE COPY PORT #1

~1101

| REMOTE COPY PAIR #2 |
| REMOTE COPY PAIR #3 |
| REMOTE COPY PAIR #7 | ~1102

REMOTE COPY PORT #2

~1101

| REMOTE COPY PAIR #1 |
| REMOTE COPY PAIR #4 |
| REMOTE COPY PAIR #5 |
| REMOTE COPY PAIR #6 | ~1102

FIG. 12

SERVER #1 ~3

110

210

EP 1 486 862 A2

**SYSTEM #1**

181 / 13a / 182
CHA / 131 / 132 / 136
REMOTE COPY PROCESSING EXECUTION
DIFFERENCE MANAGEMENT
ORDER MANAGEMENT

COMMON MEMORY ~17a
CACHE MEMORY ~16a
19a

DKA
INTER-CLUSTER TRANSFER
DKA
14b
14a
CLUSTER #11
111

LOGICAL VOLUME A ~152

185 / 13b / 186
CHA / 133 / 134 / 135
REMOTE COPY PROCESSING EXECUTION
DIFFERENCE MANAGEMENT
ORDER MANAGEMENT

COMMON MEMORY ~17b
CACHE MEMORY ~16b
19b

DKA / 14c
DKA / 14d
CLUSTER #12
112

**SYSTEM #2**

281 / 282
CHA / CHA
13c / 13c

COMMON MEMORY ~17c
CACHE MEMORY ~16c
19c

DKA / 14e
DKA / 14f
CLUSTER #21
211

LOGICAL VOLUME B ~252

285 / 286
CHA / CHA
13d / 13d

COMMON MEMORY ~17d
CACHE MEMORY ~16d
19d

DKA / 14g
DKA / 14h
CLUSTER #22
212

33

# FIG. 13

START

USER SELECTS ONE
SYSTEM FOR BACKUP FROM
INFORMATION DISPLAYED
ON DISPLAY SCREEN 41
AND INPUTS IT — STEP 13001

STEP 13002

CANDIDATE VOLUME
FOR DUPLICATE VOLUME IS
PRESENT IN DUPLICATE
SYSTEM
? — N

STEP 13003

USER IS INDICATED THAT
ANOTHER SYSTEM IS
TO BE RE-SELECTED

Y

STEP 13004

LOAD STATES OF PORTS
ARE INDICATED TO USER

USER SELECTS PORT
HAVING LIGHT LOAD STATE
FROM CANDIDATE PORTS — STEP 13005

STEP 13006

CANDIDATE VOLUME
BELONGING TO SAME CLUSTER
AS SELECTED PORT IS
PRESENT? — N

STEP 13008

ANOTHER
CLUSTER IS
SELECTED

Y

CANDIDATE VOLUMES ARE
NARROWED DOWN
TO BE INDICATED TO USER — STEP 13007

END

# FIG. 14

START

REMOTE COPY REQUEST ISSUED BY SERVER 3 (#1) IS RECEIVED BY CHA 13 OF CLUSTER #11 — STEP 14001

NOT STORED IN CACHE ? — N

STEP 14009 — Y

CHA 13 OF CLUSTER 11 ISSUES EADING REQUEST OF REMOTE COPY TO DHA 14 — STEP 14002

DKA 14 OF CLUSTER #11 RECEIVES REQUEST AND EXECUTES READING PROCESSING AND STORES READ DATA INCACHE MEMORY 16 OF CLUSTER #12 — STEP 14003

CHA OF CLUSTER #11 STARTS REMOTE COPY PROCESSING EXECUTION UNIT OF CHA OF CLUSTER #12 — STEP 14004

CHA OF CLUSTER #12 STARTS REMOTE COPY PROCESSING — STEP 14005

DATA IN CACHE MEMORY 16 OF CLUSTER #12 IS TRANSFERRED TO CLUSTER #21 OF DUPLICATE SYSTEM #2 THROUGH RIO PORT 186 — STEP 14006

CHA 13 OF CLUSTER #21 OF DUPLICATE SYSTEM #2 RECEIVES DATA AND STORES IT IN CACHE MEMORY 16 OF CLUSTER #21 — STEP 14007

CHA 13 OF CLUSTER #21 STARTS REMOTE COPY PROCESSING. DKA OF CLUSTER #21 STORES DATA STORED IN CACHE MEMORY IN VOLUME B 252. — STEP 14008

END

# FIG. 15

START

| CHA 13A OF CLUSTER #11 RECEIVES WRITE REQUEST FROM SERVER #1(3) | STEP 15001 |
| --- | --- |

| WRITE DATA IS WRITTEN IN CACHE MEMORY 16 OF CLUSTER #11 | STEP 15002 |
| --- | --- |

| DIFFERENTIAL BIT MAP AND ORDER MANAGEMENT TABLE ARE UPDATED IN ACCORDANCE WITH WRITTEN WRITE DATA | STEP 15003 |
| --- | --- |

| CLUSTER #11 INSTRUCTS CHA 13B OF CLUSTER #12 TO START UPDATE COPY TO THEREBY START REMOTE COPY PROCESSING EXECUTION UNIT 133 | STEP 15004 |
| --- | --- |

| DATA EARLIEST IN ORDER IS SEARCHED FOR WITH REFERENCE TO ORDER MANAGEMENT TABLE | STEP 15005 |
| --- | --- |

| DATA IS COPIED FROM CACHE MEMORY 16 OF CLUSTER #11 TO SYSTEM #2 | STEP 15006 |
| --- | --- |

| TURN OFF RELEVANT SIGNAL IN DIFFERENTIAL BIT MAP. DATA IS STORED FROM CACHE MEMORY 16 OF CLUSTER #11 INTO DISK CORRESPONDING TO LOGICAL VOLUME A IN WRITE-AFTER MANNER. ORDER MANAGEMENT TABLE IS UPDATED. | STEP 15007 |
| --- | --- |

NEXT COPY EXISTS? — Y

STEP 15008

N

END

# FIG. 16

START

LOAD STATE OF EACH
PORT IS SEARCHED
AT PREDETERMINED
INTERVALS — STEP 16001

STEP 16002

LOAD STATE
EXCEEDS THRESHOLD
? — N

Y

STEP 16003

PORTS
HAVING LOAD
EXCEEDING THRESHOLD ARE
UNEVENLY DISTRIBUTED IN
PARTICULAR
CLUSTER ? — N

Y

STEP 16004

LOAD IS DISTRIBUTED
AMONG CLUSTERS

STEP 16005

LOAD IS DISTRIBUTED
WITHIN CLUSTER

END

# FIG. 17

START

**STEP 17001**

WHETHER PORT NOT CHANGED AND PORT CHANGED EXIST IN SAME CLUSTER IS JUDGED

N

Y

**STEP 17002**

UNPROCESSED REMOTE COPY PROCESSING IS REASSIGNED TO CHANGED PORT

**STEP 17003**

REMOTE COPY PORT INFORMATION IS UPDATED AFTER COMPLETION OF PROCESSING BEING EXECUTED WITH REGARD TO REMOTE COPY PAIR BEING REMOTE COPY EXECUTED

**STEP 17004**

WHEN UPDATE PROCESSING IS FINISHED, UNPROCESSED PROCESSING REQUEST CONCERNING UPDATED REMOTE COPY PAIR IS DELETED FROM REMOTE COPY PROCESSING REQUEST QUEUE OF REMOTE COPY PORT NOT CHANGED

**STEP 17005**

UNPROCESSED REMOTE COPY PROCESSING IS REASSIGNED TO CHANGED PORT BY INTER-PROCESSOR COMMUNICATION

**STEP 17006**

WITH REGARD TO REMOTE COPY PAIR BEING REMOTE COPY EXECUTED, REMOTE COPY PORT INFORMATION IS UPDATED WHEN PROCESSING BEING EXECUTED IS COMPLETED

**STEP 17007**

REMOTE COPY PROCESSING REQUEST REASSIGNED TO REMOTE COPY PORT OF CHANGED REMOTE COPY PORT IS DELETED FROM REMOTE COPY PROCESSING REQUEST QUEUE OF REMOTE COPY PORT NOT CHANGED

**STEP 17008**

INSTRUCT PROCESSOR CONTROLLING CHANGED PORT TO START REMOTE COPY PROCESSING

END

# FIG. 18

| 0 | 0 | 0 | 0 | 0 | 1 | 1 | 0 | --- | | | | |
|---|---|---|---|---|---|---|---|---|---|---|---|---|
| | | | | | | | | | | | | |
| | | | | | | | | | | | | |

VOLUME CAPACITY

1901

# FIG. 19

19021  19022  19023

| SEQUENCE # | WRITE TIME | WRITE DATA STORAGE LOCATION |
|---|---|---|
| #1 | 15:13:37 | 12345 |
| | | |

1902

# FIG. 20

START

SELECT ONE OF PORTS
HAVING LOAD STATE
EXCEEDING THRESHOLD
— STEP 20001

LOAD STATE OF PORT IN SAME
CLUSTER AS SELECTED PORT IS
SEARCHED FOR AND SEARCHED
RESULT IS INDICATED TO USER
IF NECESSARY
— STEP 20002

STEP 20003
PORT HAVING
LOAD LIGHTER THAN
THRESHOLD IS PRESENT IN
PORTS OF SAME CLUSTER AS
SELECTED PORT
?
N

Y

SELECT PORT HAVING LOAD
LIGHTER THAN THRESHOLD
— STEP 20004

HOW MANY REMOTE COPY
PROCESSING PAIRS ASSIGNED
TO PORT CURRENTLY
ARE REDUCED IS DECIDED
— STEP 20005

STEP 20006
Y
PORTS HAVING
LOAD EXCEEDING THRESHOLD
EXIST YET ?

N

END

# FIG. 21

```
                    ┌─────────────┐
                    │    START    │
                    └─────────────┘
                           │
         ┌─────────────────┤
         │                 ▼
         │    ┌─────────────────────┐
         │    │ SELECT ONE OF PORTS │      STEP
         │    │ HAVING LOAD EXCEEDING│     21001
         │    │     THRESHOLD       │
         │    └─────────────────────┘
         │                 │
         │                 ▼
         │    ┌─────────────────────┐
         │    │ SELECT ANOTHER      │      STEP
         │    │ CLUSTER DIFFERENT   │     21002
         │    │ FROM CLUSTER TO     │
         │    │ WHICH PORT SELECTED │
         │    │ IN STEP 21001 BELONGS│
         │    └─────────────────────┘
         │                 │
         │                 ▼
         │    ┌─────────────────────┐
         │    │ LOAD STATE OF REMOTE│
         │    │ COPY PORT IN CLUSTER│
         │    │ SELECTED IN STEP    │      STEP
         │    │ 21002 IS SEARCHED   │     21003
         │    │ FOR TO BE ACQUIRED  │
         │    │ AND IS INDICATED    │
         │    │ TO USER IF NECESSARY│
         │    └─────────────────────┘
```

STEP 21005

ANOTHER CLUSTER NOT SELECTED YET IS PRESENT YET ?  — Y / N

STEP 21004

PORT HAVING LOAD STATE LIGHTER THAN THRESHOLD IS PRESENT ?  — N

Y

| SELECT PORT HAVING LOAD LIGHTER THAN THRESHOLD |  STEP 20007

| HOW MANY REMOTE COPY PROCESSING PAIRS SSIGNED CURRENTLY TO PORT ARE REDUCED IS DECIDED |  STEP 20008

STEP 20010

PORT HAVING LOAD EXCEEDING THRESHOLD STILL EXISTS ?  — Y / N

┌─────────────┐
│     END     │
└─────────────┘

FIG. 22

# FIG. 23

START

ACQUIRE CLUSTER NUMBER — STEP 23001

LOAD OF MP IS HEAVIER OR LIGHTER ? — STEP 23002

HEAVIER

LIGHTER

VOLUME FOR DATA TO BE COPIED IS NOT TRANSFERRED — STEP 23006

VOLUME IS TRANSFERRED TO ANOTHER CLUSTER BY DATA TRANSFER — STEP 23007

REMOTE COPY REQUEST IS ISSUED — STEP 23008

END

# FIG. 24

| CLUSTER # | MP# | USE STATE | LOAD STATE | COMPARISON WITH THRESHOLD | CONTROL REMOTE COPY PATH # |
|-----------|-----|-----------|------------|---------------------------|----------------------------|
| 1 | 1 | USABLE | 100 | LIGHTER | 1 |
| 1 | 2 | | 120 | HEAVIER | 1 |
| | | | | | |

2402 2403 2404 2405 2406 2407

2401

# FIG. 25

START

STEP 25001

CLUSTER IN WHICH VOLUME FOR COPIED DATA CAN BE SECURED EXISTS ? — N →

Y

STEP 25003

JUDGE WHETHER PROCESSOR CAPABLE OF EXECUTING REMOTE COPY PROCESSING EXISTS OR NOT ? — N →

Y

STEP 25004

SELECT ONE CANDIDATE CLUSTER — STEP 25005

ERROR MESSAGE

USER INSTRUCTS DATA TRANSFER — STEP 25006

START DATA TRANSFER PROCESSING — STEP 25007

END

# FIG. 26

# FIG. 27

CONFIGURATION INFORMATION MANAGEMENT

| PORT ID# | WWN | LUN | CAPACITY | MAPPING LUN LUN |
|----------|-----|-----|----------|-----------------|
| 2702 | 2703 | 2704 | 2705 | 2706 |
| | | ⋮ | | |

2701

# FIG. 28

START

| INTERRUPT REMOTE COPY | STEP 28001 |

| COMPLETE ALREADY-ISSUED REMOTE COPY JOB | STEP 28002 |

| TRANSFER DATA STORED IN VOLUME FOR DATA TO BE REMOTE COPIED TO ANOTHER CLUSTER | STEP 28003 |

| TRANSFER INFORMATION NECESSARY FOR REMOTE COPY PROCESSING TO CLUSTER TO WHICH DATA IS TO BE COPIED | STEP 28004 |

| START REMOTE COPY PROGRAM OF CLUSTER TO WHICH DATA IS TO BE COPIED AND RESUME REMOTE COPY | STEP 28005 |

END